# EUROPEAN PATENT SPECIFICATION

(11) **EP 4 391 318 B1**
(45) Date of publication and mention of the grant of the patent: **11.03.2026**
(21) Application number: 23856316.7
(22) Date of filing: 30.06.2023
(51) Int. Cl.: H02K 3/28, H02K 3/12, H02K 3/50

(54) **SIX-POLE 54-SLOT FLAT WIRE MOTOR THREE-BRANCH BALANCING WINDING AND USE METHOD THEREFOR**
DREIZWEIGIGE AUSGLEICHSWICKLUNG MIT SECHSPOLIGEM,54-SCHLITZ-FLACHDRAHTMOTOR UND VERWENDUNGSVERFAHREN DAFÜR
ENROULEMENT D'ÉQUILIBRAGE À TROIS BRANCHES DE MOTEUR À FIL PLAT À 54 FENTES À SIX PÔLES ET SON PROCÉDÉ D'UTILISATION

(30) Priority: 24.08.2022 CN 202211016623; 19.09.2022 CN 202211135810
(43) Date of publication of application: 26.06.2024
(73) Proprietor: GZK Intelligent Power Technology (Shanghai) Co., Ltd, Shanghai 201400 (CN)
(72) Inventor: JIANG, Hua, Shanghai 201400 (CN); LIANG, Jie, Shanghai 201400 (CN); GUAN, Bo, Shanghai 201400 (CN); YIN, Hao, Shanghai 201400 (CN)
(74) Representative: Osterhoff, Utz
(86) International application number: PCT/CN2023/105417
(87) International publication number: WO 2024/041226

(56) References cited:
- WO-A1-2021/249346
- CN-A- 109 120 084
- CN-A- 114 337 034
- CN-A- 115 395 699
- CN-U- 209 913 599
- CN-U- 212 850 004
- CN-U- 219 678 223
- US-A1- 2015 076 953

## Description

### CROSS-REFERENCE TO RELATED APPLICATIONS

The present application claims priority to Chinese patent application No. 202211135810.9, and filed on September 19, 2022.

### TECHNICAL FIELD

The present application relates to the technical field of components of windings of the motor distributed in slots, and in particular to a three-branch balanced winding of a six-pole, fifty-four-slot flat copper wire motor, and a method.

### BACKGROUND

Flat copper wire drive motors used in electric vehicles generally suffer from unbalanced current in each phase winding branch, many special-shaped wires, and poor mass production processability. As the frequency of the power supply gradually increases, due to potential imbalance between the same-phase branches, the current between the parallel branches will gradually be unevenly distributed, and there will be circulating current between the branches, which will eventually lead to uneven heating of the inner and outer armature winding branches, thereby damaging the insulation system of the motor. Flat copper wire motors have multiple parallel branches, resulting in a complex structure of bridging wires, star point wires, and power supply lead wires connected to the end of the flat copper wires, which does not meet the requirements of automated wire insertion processes.

CN 114 337 034 A discloses a six-pole, fifty-four slot, six layer winding having three parallel branches per phase.

### SUMMARY

In order to overcome the shortcomings of the related art and provide a motor winding structure with compact structure and balanced current, the present application provides a three-branch balanced winding of a six-pole, fifty-four-slot flat copper wire motor according to claim 1 and methods according to claims 6-9.

The present application achieves the purpose through the following technical solutions.

A three-branch balanced winding of a six-pole, fifty-four-slot flat copper wire motor includes:
a three-phase flat copper wire winding distributed symmetrically along a circumferential direction of an iron core slot, where the three-phase flat copper wire winding includes a wire straight portion distributed in the iron core slot, a welding end distributed at one side of an end of an iron core, and a power lead wire end distributed at another side of the iron core (2); and
spans of the welding end are equal, and heights of the lead welding ends are equal; the power lead wire end is composed of four U-Pin wire types and one I-pin wire type, and a first layer of the power lead wire end is composed of an I-Pin wire and an U-pin wire with an equal span; both a second layer and a third layer are composed of U-pin wires with an equal span; both a fourth layer and a fifth layer are composed of U-pin wires with an equal span; a sixth layer is composed of a U-pin wire with an equal span; the I-Pin wire includes a U-phase power wire, a V-phase power wire, a W-phase power wire, and a star point wire when a Y-connection manner is adopted in the winding, and the U-phase power wire, the V-phase power wire, the W-phase power wire, and the star point wire are distributed at an end of the winding at the first layer of the iron core slot; no other protruding special-shaped wires and bridge wires are provided.

In the three-branch balanced winding of the six-pole, fifty-four-slot flat copper wire motor, the three-phase flat copper wire winding is a six-layer winding, and each phase winding is composed of three branches connected in parallel; a connection sequence of each parallel branch is configured as follows: entering from a first layer L1 of the iron core slot; passing through a second layer L2, a third layer L3, a fourth layer L4, a fifth layer L5, and a sixth layer L6 along a forward direction in sequence; passing through the sixth layer L6, the fifth layer L5, the fourth layer L4, the third layer L3, the second layer L2, the first layer L1 along a reverse direction in sequence; passing through the first layer L1, the second layer L2, the third layer L3, the fourth layer L4, the fifth layer L5, and the sixth layer L6 along the forward direction; passing through the sixth layer L6, the fifth layer L5, the fourth layer L4, the third layer L3, the second layer L2, the first layer L1 along the reverse direction; passing through the first layer L1, the second layer L2, the third layer L3, the fourth layer L4, the fifth layer L5, and the sixth layer L6 along the forward direction; then passing through the sixth layer L6, the fifth layer L5, the fourth layer L4, the third layer L3, and the second layer L2 along the reverse direction; finally leading out from the first layer L1.

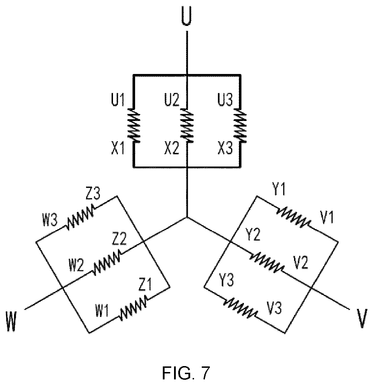

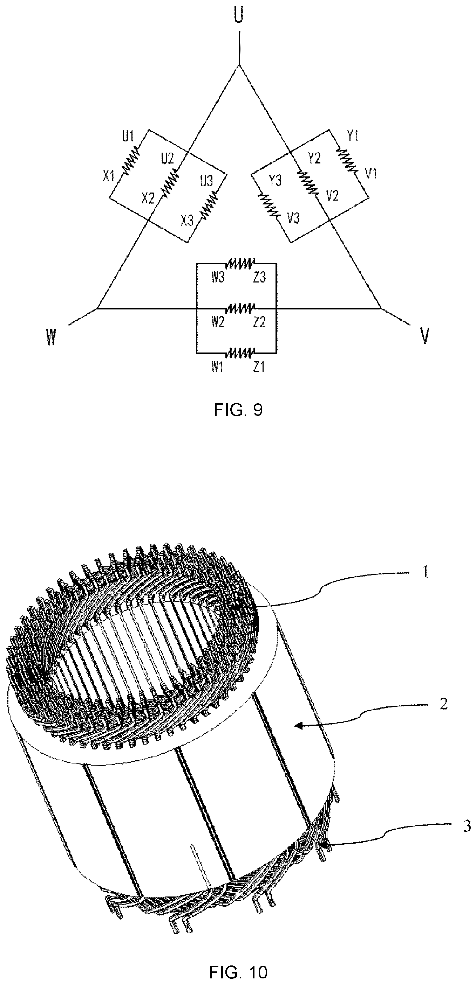

In the three-branch balanced winding of the six-pole, fifty-four-slot flat copper wire motor, the U-phase power wire, the V-phase power wire and the W-phase of the three-phase flat copper wire winding is configured to adopt a Y-connection manner (as shown in the FIG. 7) or a delta connection manner (as shown in the FIG. 9); and
the three-phase flat copper wire winding is configured to adopt a short span with a span Y of eight, a full span with a span Y of nine, or a long span with a span Y of ten.

In the three-branch balanced winding of the six-pole, fifty-four-slot flat copper wire motor, where the U-phase power wire, the V-phase power wire, the W-phase power wire, the star point wire (when the winding is configured to adopt a Y-connection manner) are evenly distributed at the end of the winding at the first layer of the iron core slot when the winding is configured to adopt a Y-connection manner.

A method of using the three-branch balanced winding of the six-pole fifty-four-slot flat copper wire motor, where the method is implemented in sequence as follows:
a branch 1 of the U-phase winding, namely a first end U1 of U1-X1, enters from the first layer L1 of a slot 1 of the winding along a current flow direction, finally flows out from a first layer L1 of a slot 12, and the winding connection sequence is: L1 of a slot 1→ L2 of a slot 9→ L3 of a slot 19→ L4 of a slot 27→ L5 of a slot 37→ L6 of a slot 45→ L6 of a slot 54→ L5 of a slot 46→ L4 of a slot 36→ L3 of a slot 28→ L2 of a slot 18→ L1 of a slot 10→ L1 of a slot 2→ L2 of a slot 10→ L3 of a slot 20→ L4 of a slot 28→ L5 of a slot 38→ L6 of a slot 46→ L6 of a slot 1→ L5 of a slot 47→ L4 of a slot 37→ L3 of a slot 29→ L2 of a slot 19→ L1 of a slot 11→ L1 of a slot 3→ L2 of a slot 11→ L3 of a slot 21→ L4 of a slot 29→ L5 of a slot 39→ L6 of a slot 47→ L6 of a slot 2→ L5 of a slot 48→ L4 of a slot 38→ L3 of a slot 30→ L2 of a slot 20→ L1 of a slot 12;
a branch 2 of the U-phase winding, namely a first end U2 of U2-X2, enters from the first layer L1 of a slot 19 of the winding along a current flow direction, finally flows out from a first layer L1 of a slot 30, and the winding connection sequence is: L1 of a slot 19→ L2 of a slot 27→ L3 of a slot 37→ L4 of a slot 45→ L5 of a slot 1→ L6 of a slot 9→ L6 of a slot 18→ L5 of a slot 10→ L4 of a slot 54→ L3 of a slot 46→ L2 of a slot 36→ L1 of a slot 28→ L1 of a slot 20→ L2 of a slot 28→ L3 of a slot 38→ L4 of a slot 46→ L5 of a slot 2→ L6 of a slot 10→ L6 of a slot 19→ L5 of a slot 11→ L4 of a slot 1→ L3 of a slot 47→ L2 of a slot 37→ L1 of a slot 29→ L1 of a slot 21→ L2 of a slot 29→ L3 of a slot 39→ L4 of a slot 47→ L5 of a slot 3→ L6 of a slot 11→ L6 of a slot 20→ L5 of a slot 12→ L4 of a slot 2→ L3 of a slot 48→ L2 of a slot 38→ L1 of a slot 30;
a branch 3 of the U-phase winding, namely a first end U1 of U3-X3, enters from the first layer L1 of a slot 37 of the winding along a current flow direction, finally flows out from a first layer L1 of a slot 48, and the winding connection sequence is: L1 of a slot 37→ L2 of a slot 45→ L3 of a slot 1→ L4 of a slot 9→ L5 of a slot 19→ L6 of a slot 27→ L6 of a slot 36→ L5 of a slot 28→ L4 of a slot 18→ L3 of a slot 10→ L2 of a slot 54→ L1 of a slot 46→ L1 of a slot 38→ L2 of a slot 46→ L3 of a slot 2→ L4 of a slot 10→ L5 of a slot 20→ L6 of a slot 28→ L6 of a slot 37→ L5 of a slot 29→ L4 of a slot 19→ L3 of a slot 11→ L2 of a slot 1→ L1 of a slot 47→ L1 of a slot 39→ L2 of a slot 47→ L3 of a slot 3→ L4 of a slot 11→ L5 of a slot 21→ L6 of a slot 29→ L6 of a slot 38→ L5 of a slot 30→ L4 of a slot 20→ L3 of a slot 12→ L2 of a slot 2→ L1 of a slot 48;
a branch 1 of the V-phase winding, namely a first end V1 of V1-Y1, enters from the first layer L1 of a slot 7 of the winding along a current flow direction, finally flows out from a first layer L1 of a slot 18, and the winding connection sequence is: L1 of a slot 7→ L2 of a slot 15→ L3 of a slot 25→ L4 of a slot 33→ L5 of a slot 43→ L6 of a slot 51→ L6 of a slot 6→ L5 of a slot 52→ L4 of a slot 42→ L3 of a slot 34→ L2 of a slot 24→ L1 of a slot 16→ L1 of a slot 8→ L2 of a slot 16→ L3 of a slot 26→ L4 of a slot 34→ L5 of a slot 44→ L6 of a slot 52→ L6 of a slot 7→ L5 of a slot 53→ L4 of a slot 43→ L3 of a slot 35→ L2 of a slot 25→ L1 of a slot 17→ L1 of a slot 9→ L2 of a slot 17→ L3 of a slot 27→ L4 of a slot 35→ L5 of a slot 45→ L6 of a slot 53→ L6 of a slot 8→ L5 of a slot 54→ L4 of a slot 44→ L3 of a slot 36→ L2 of a slot 26→ L1 of a slot 18;
a branch 2 of the V-phase winding, namely a first end V2 of V2-Y2, enters from the first layer L1 of a slot 25 of the winding along a current flow direction, finally flows out from a first layer L1 of a slot 36, and the winding connection sequence is: L1 of a slot 25→ L2 of a slot 33→ L3 of a slot 43→ L4 of a slot 51→ L5 of a slot 7→ L6 of a slot 15→ L6 of a slot 24→ L5 of a slot 16→ L4 of a slot 6→ L3 of a slot 52→ L2 of a slot 42→ L1 of a slot 34→ L1 of a slot 26→ L2 of a slot 34→ L3 of a slot 44→ L4 of a slot 52→ L5 of a slot 8→ L6 of a slot 16→ L6 of a slot 25→ L5 of a slot 17→ L4 of a slot 7→ L3 of a slot 53→ L2 of a slot 43→ L1 of a slot 35→ L1 of a slot 27→ L2 of a slot 35→ L3 of a slot 45→ L4 of a slot 53→ L5 of a slot 9→ L6 of a slot 17→ L6 of a slot 26→ L5 of a slot 18→ L4 of a slot 8→ L3 of a slot 54→ L2 of a slot 44→ L1 of a slot 36;
a branch 3 of the V-phase winding, namely a first end V3 of V3-Y3, enters from the first layer L1 of a slot 43 of the winding along a current flow direction, finally flows out from a first layer L1 of a slot 54, and the winding connection sequence is: L1 of a slot 43→ L2 of a slot 51→ L3 of a slot 7→ L4 of a slot 15→ L5 of a slot 25→ L6 of a slot 33→ L6 of a slot 42→ L5 of a slot 34→ L4 of a slot 24→ L3 of a slot 16→ L2 of a slot 6→ L1 of a slot 52→ L1 of a slot 44→ L2 of a slot 52→ L3 of a slot 8→ L4 of a slot 16→ L5 of a slot 26→ L6 of a slot 34→ L6 of a slot 43→ L5 of a slot 35→ L4 of a slot 25→ L3 of a slot 17→ L2 of a slot 7→ L1 of a slot 53→ L1 of a slot 45→ L2 of a slot 53→ L3 of a slot 9→ L4 of a slot 17→ L5 of a slot 27→ L6 of a slot 35→ L6 of a slot 44→ L5 of a slot 36→ L4 of a slot 26→ L3 of a slot 18→ L2 of a slot 8→ L1 of a slot 54;
a branch 1 of the W-phase winding, namely a first end W1 of W1-Z1, enters from the first layer L1 of a slot 13 of the winding along a current flow direction, finally flows out from a first layer L1 of a slot 24, and the winding connection sequence is: L1 of a slot 13→ L2 of a slot 21→ L3 of a slot 31→ L4 of a slot 39→ L5 of a slot 49→ L6 of a slot 3→ L6 of a slot 12→ L5 of a slot 4→ L4 of a slot 48→ L3 of a slot 40→ L2 of a slot 30→ L1 of a slot 22→ L1 of a slot 14→ L2 of a slot 22→ L3 of a slot 32→ L4 of a slot 40→ L5 of a slot 50→ L6 of a slot 4→ L6 of a slot 13→ L5 of a slot 5→ L4 of a slot 49→ L3 of a slot 41→ L2 of a slot 31→ L1 of a slot 23→ L1 of a slot 15→ L2 of a slot 23→ L3 of a slot 33→ L4 of a slot 41→ L5 of a slot 51→ L6 of a slot 5→ L6 of a slot 14→ L5 of a slot 6→ L4 of a slot 50→ L3 of a slot 42→ L2 of a slot 32→ L1 of a slot 24;
a branch 2 of the W-phase winding, namely a first end W1 of W2-Z2, enters from the first layer L1 of a slot 31 of the winding along a current flow direction, finally flows out from a first layer L1 of a slot 42, and the winding connection sequence is: L1 of a slot 31→ L2 of a slot 39→ L3 of a slot 49→ L4 of a slot 3→ L5 of a slot 13→ L6 of a slot 21→ L6 of a slot 30→ L5 of a slot 22→ L4 of a slot 12→ L3 of a slot 4→ L2 of a slot 48→ L1 of a slot 40→ L1 of a slot 32→ L2 of a slot 40→ L3 of a slot 50→ L4 of a slot 4→ L5 of a slot 14→ L6 of a slot 22→ L6 of a slot 31→ L5 of a slot 23→ L4 of a slot 13→ L3 of a slot 5→ L2 of a slot 49→ L1 of a slot 41→ L1 of a slot 33→ L2 of a slot 41→ L3 of a slot 51→ L4 of a slot 5→ L5 of a slot 15→ L6 of a slot 23→ L6 of a slot 32→ L5 of a slot 24→ L4 of a slot 14→ L3 of a slot 6→ L2 of a slot 50→ L1 of a slot 42;
a branch 3 of the W-phase winding, namely a first end W3 of W3-Z3, enters from the first layer L1 of a slot 49 of the winding along a current flow direction, finally flows out from a first layer L1 of a slot 6, and the winding connection sequence is: L1 of a slot 49→ L2 of a slot 3→ L3 of a slot 13→ L4 of a slot 21→ L5 of a slot 31→ L6 of a slot 39→ L6 of a slot 48→ L5 of a slot 40→ L4 of a slot 30→ L3 of a slot 22→ L2 of a slot 12→ L1 of a slot 4→ L1 of a slot 50→ L2 of a slot 4→ L3 of a slot 14→ L4 of a slot 22→ L5 of a slot 32→ L6 of a slot 40→ L6 of a slot 49→ L5 of a slot 41→ L4 of a slot 31→ L3 of a slot 23→ L2 of a slot 13→ L1 of a slot 5→ L1 of a slot 51→ L2 of a slot 5→ L3 of a slot 15→ L4 of a slot 23→ L5 of a slot 33→ L6 of a slot 41→ L6 of a slot 50→ L5 of a slot 42→ L4 of a slot 32→ L3 of a slot 24→ L2 of a slot 14→ L1 of a slot 6.

The present application has the following beneficial effects.
1. The current of the three-phase winding is balanced, and the branch current of each phase winding can be balanced, which solves the adverse effects of increased alternating current losses in the windings due to unbalanced branch currents, reduces the branch circulating current, thereby improving the efficiency of the motor.
2. Since the problem of unbalanced current in each branch is solved, the uneven temperature distribution in the inner and outer layers of the flat copper wire winding is improved, thereby improving the reliability of the entire stator insulation system.
3. The winding welding ends are provided with equal spans, equal heights, and consistent circumferential distribution, which facilitates automated mass production processes, such as cutting, twisting, and welding, thereby reducing the complexity of automated equipment, and facilitating automated mass production.
4. The entire motor winding line specifications are less, and the investment in production line equipment is small, which facilitates automated wiring. There are five wire types: two types of wires at the first layer of the iron core slot (one U-Pin wire and one I-Pin wire), one type of U-Pin wire at the second and third layers of the iron core slot, one type of U-Pin wire at the fourth and fifth layers of the iron core slot, and one type of U-Pin wire at the sixth layer of the iron core slot.
5. Both the power supply lead wire and the star point wire are located at the first layer of windings in the iron core slot (the first layer at the bottom of the slot). The yoke space at the end of the winding can be used, and the axial space layout at the end of the winding can also be used, which is beneficial to shortening the axial height at the end of the winding of the motor.

### BRIEF DESCRIPTION OF THE DRAWINGS

FIG. 1 is a distribution diagram of a flat copper wire in the iron core slot according to the present application.
FIG. 2 is a phase diagram of a U-phase short-range winding, a V-phase short-range winding, and a W-phase short-range winding in the iron core slot according to the present application.
FIG. 3 is a connection diagram of a first branch of the U-phase winding according to the present application.
FIG. 4 is a connection diagram of a second branch of the U-phase winding according to the present application.
FIG. 5 is a connection diagram of a third branch of the U-phase winding according to the present application.
FIG. 6 is a connection diagram of the U-phase winding according to the present application.
FIG. 7 is a connection diagram of ends of a three-phase winding with the Y-connection manner according to the present application.
FIG. 8 is a connection diagram of a U-phase winding, a V-phase winding, and a W-phase winding according to the present application.
FIG. 9 is a connection diagram of ends of the three-phase winding with the delta-connection according to the present application.
FIG. 10 is a schematic structural diagram of the welding end of three-phase winding according to the present application.

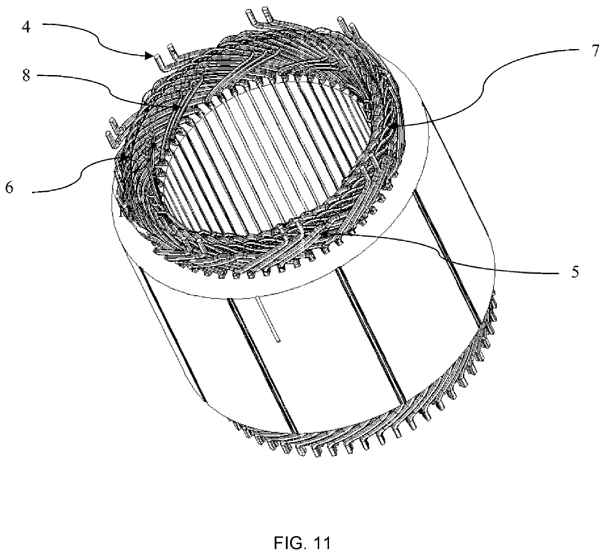

FIG. 11 is a schematic structural diagram of the lead wire end of the three-phase winding according to the present application.

The names of the components represented by the reference numbers are as follows:
1, welding end of the winding end; 2, straight portion of the wire in the iron core and the iron core slot; 3, power lead end; 4, I-pin wire and star point lead wire of the power lead wire (when adopting the Y-connection manner) at the first layer in the iron core slot; 5, U-pin wire at the first layer in the iron core slot; 6, U-pin wire at the second and third layers in the iron core slot; 7, U-pin wire at the fourth and fifth layers in the iron core slot; 8, U-pin wire at the sixth layer in the iron core slot.

### DETAILED DESCRIPTION OF THE EMBODIMENTS

The present application will be further described below through specific embodiments.

### First embodiment:

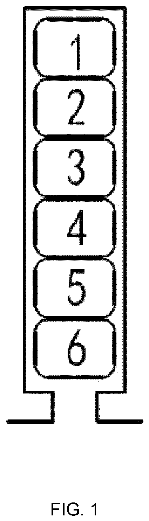

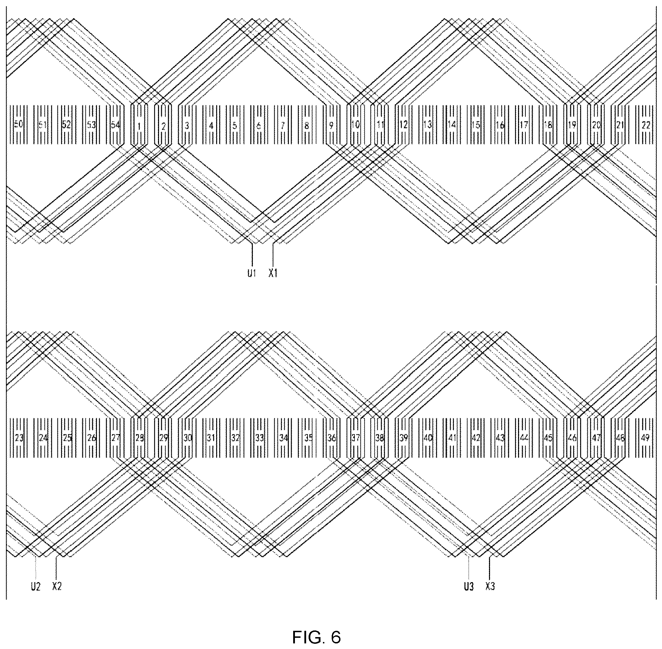

A three-branch balanced winding of a six-pole, fifty-four-slot flat copper wire motor with a short range of Y=8, adopts the Y-connection manner, and a number a of parallel branches is 3. The winding connection structure is as shown in FIG. 1 to FIG. 8, and the specific structure is as follows.

The winding expansion diagram shows a six-layer flat copper wire winding, that is, there are 6 flat copper wires in each slot number. The number of flat wire layers from the bottom of the slot to the opening of the slot is 1, 2, 3, 4, 5, and 6, which is as shown in FIG. 1.

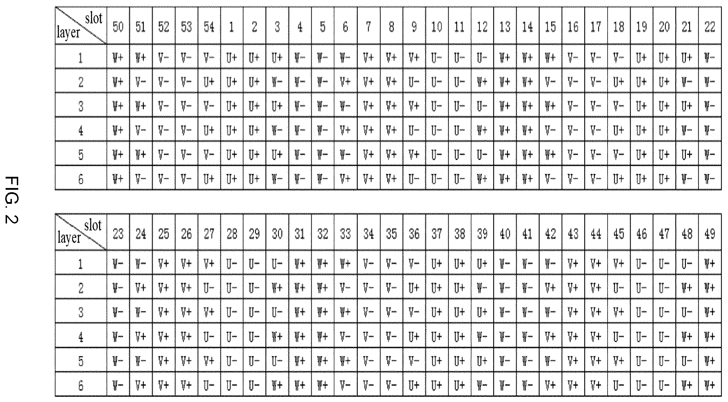

As for the straight portion of the winding, the straight portion of the three-phase flat copper wire winding is evenly divided into three-phase symmetrical windings based on the the short range Y=8, namely the U phase, the V phase and the W phase, as shown in FIG. 2.

The winding adopts the Y-connection manner, the number a of parallel branches is 3, and each phase winding is composed of three branches connected in parallel, as shown in FIG. 7.

As shown in FIG. 7, the U-phase winding is composed of a branch 1 (U1-X1), a branch 2 (U2-X2) and a branch 3 (U3-X3), and the V-phase winding is composed of a branch 1 (V1-Y1), a branch 2 (V2-Y2) and a branch 3 (V3-Y3), the W-phase winding is composed of a branch 1 (W1-Z1), a branch 2 (W2-Z2) and a branch 3 (W3-Z3).

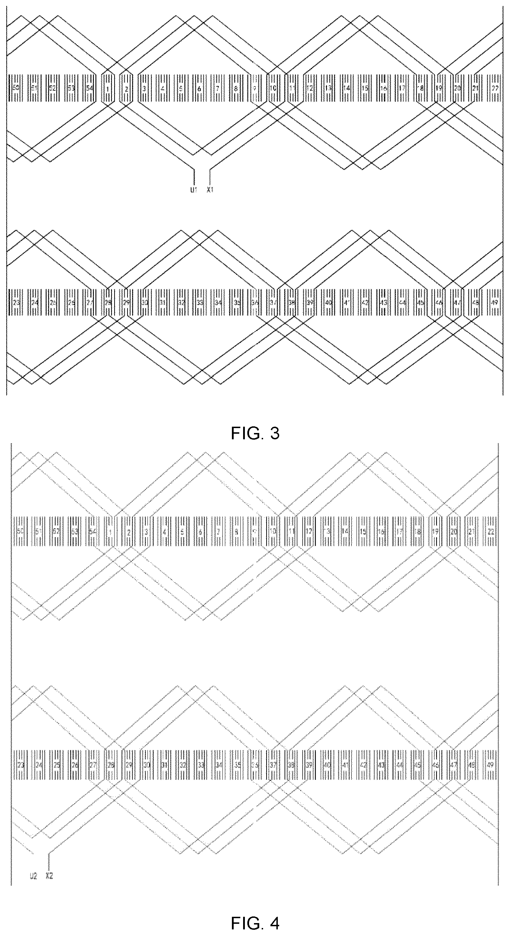

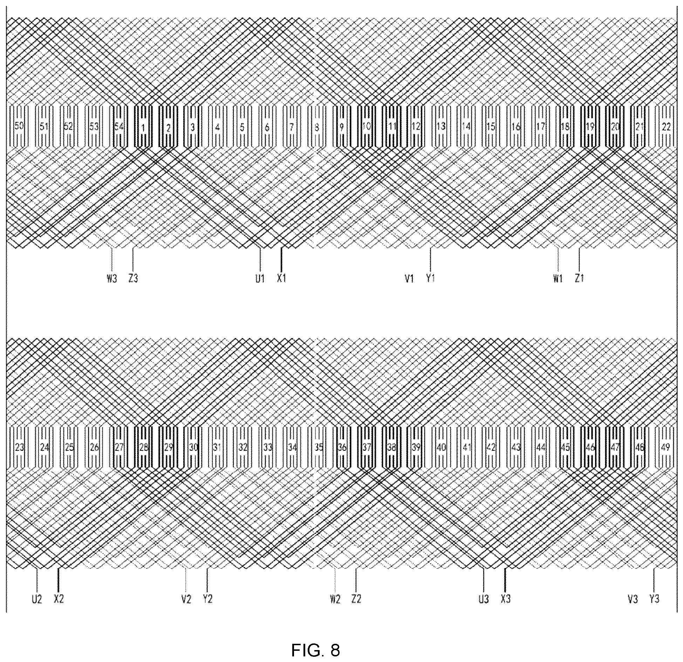

The branch 1 of the U-phase winding, namely a first end U1 of U1-X1, enters from the first layer L1 of a slot 1 of the winding along a current flow direction, finally flows out from a first layer L1 of a slot 12, and the winding connection sequence is: L1 of a slot 1→ L2 of a slot 9→ L3 of a slot 19→ L4 of a slot 27→ L5 of a slot 37→ L6 of a slot 45→ L6 of a slot 54→ L5 of a slot 46→ L4 of a slot 36→ L3 of a slot 28→ L2 of a slot 18→ L1 of a slot 10→ L1 of a slot 2→ L2 of a slot 10→ L3 of a slot 20→ L4 of a slot 28→ L5 of a slot 38→ L6 of a slot 46→ L6 of a slot 1→ L5 of a slot 47→ L4 of a slot 37→ L3 of a slot 29→ L2 of a slot 19→ L1 of a slot 11→ L1 of a slot 3→ L2 of a slot 11→ L3 of a slot 21→ L4 of a slot 29→ L5 of a slot 39→ L6 of a slot 47→ L6 of a slot 2→ L5 of a slot 48→ L4 of a slot 38→ L3 of a slot 30→ L2 of a slot 20→ L1 of a slot 12. The specific connection method can be shown in FIG. 3 or FIG. 8.

The branch 2 of the U-phase winding, namely a first end U2 of U2-X2, enters from the first layer L1 of a slot 19 of the winding along a current flow direction, finally flows out from a first layer L1 of a slot 30, and the winding connection sequence is: L1 of a slot 19→ L2 of a slot 27→ L3 of a slot 37→ L4 of a slot 45→ L5 of a slot 1→ L6 of a slot 9→ L6 of a slot 18→ L5 of a slot 10→ L4 of a slot 54→ L3 of a slot 46→ L2 of a slot 36→ L1 of a slot 28→ L1 of a slot 20→ L2 of a slot 28→ L3 of a slot 38→ L4 of a slot 46→ L5 of a slot 2→ L6 of a slot 10→ L6 of a slot 19→ L5 of a slot 11→ L4 of a slot 1→ L3 of a slot 47→ L2 of a slot 37→ L1 of a slot 29→ L1 of a slot 21→ L2 of a slot 29→ L3 of a slot 39→ L4 of a slot 47→ L5 of a slot 3→ L6 of a slot 11→ L6 of a slot 20→ L5 of a slot 12→ L4 of a slot 2→ L3 of a slot 48→ L2 of a slot 38→ L1 of a slot 30. The specific connection method can be shown in FIG. 4 or FIG. 8.

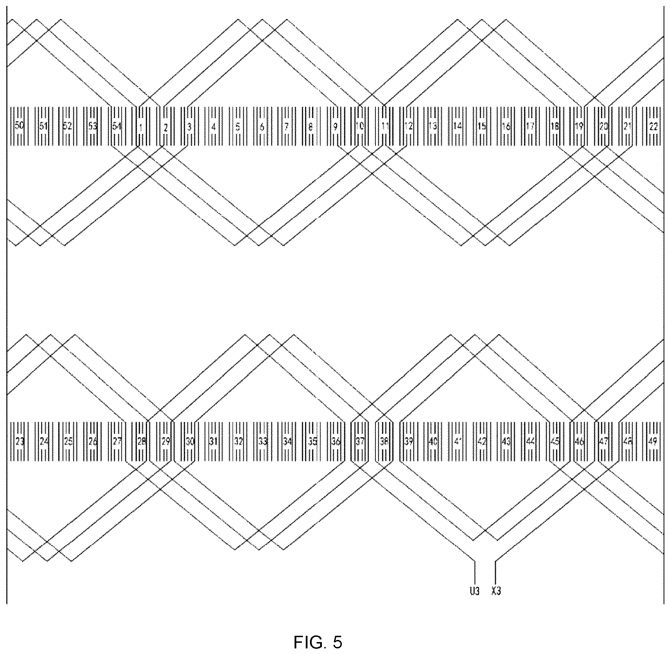

The branch 3 of the U-phase winding, namely a first end U1 of U3-X3, enters from the first layer L1 of a slot 37 of the winding along a current flow direction, finally flows out from a first layer L1 of a slot 48, and the winding connection sequence is: L1 of a slot 37→ L2 of a slot 45→ L3 of a slot 1→ L4 of a slot 9→ L5 of a slot 19→ L6 of a slot 27→ L6 of a slot 36→ L5 of a slot 28→ L4 of a slot 18→ L3 of a slot 10→ L2 of a slot 54→ L1 of a slot 46→ L1 of a slot 38→ L2 of a slot 46→ L3 of a slot 2→ L4 of a slot 10→ L5 of a slot 20→ L6 of a slot 28→ L6 of a slot 37→ L5 of a slot 29→ L4 of a slot 19→ L3 of a slot 11→ L2 of a slot 1→ L1 of a slot 47→ L1 of a slot 39→ L2 of a slot 47→ L3 of a slot 3→ L4 of a slot 11→ L5 of a slot 21→ L6 of a slot 29→ L6 of a slot 38→ L5 of a slot 30→ L4 of a slot 20→ L3 of a slot 12→ L2 of a slot 2→ L1 of a slot 48. The specific connection method can be shown in FIG. 5 or FIG. 8.

In the same way, the V-phase winding and U-phase winding branches are connected in the same way, except that the starting slot is different, that is, a branch 1 (V1-Y1) of the V-phase winding enters from the first layer L1 of a slot 7 of the winding along a current flow direction and finally flows out from a first layer L1 of a slot 18, a branch 2 (V2-Y2) of the V-phase winding enters from the first layer L1 of a slot 25 of the winding along a current flow direction and finally flows out from a first layer L1 of a slot 36, a branch 3 (V3-Y3) of the V-phase winding enters from the first layer L1 of a slot 43 of the winding along a current flow direction and finally flows out from a first layer L1 of a slot 54. The detailed connection sequence of the three branches is as shown in FIG. 8.

The branch 1 of the V-phase winding, namely a first end V1 of V1-Y1, enters from the first layer L1 of a slot 7 of the winding along a current flow direction, finally flows out from a first layer L1 of a slot 18, and the winding connection sequence is: L1 of a slot 7→ L2 of a slot 15→ L3 of a slot 25→ L4 of a slot 33→ L5 of a slot 43→ L6 of a slot 51→ L6 of a slot 6→ L5 of a slot 52→ L4 of a slot 42→ L3 of a slot 34→ L2 of a slot 24→ L1 of a slot 16→ L1 of a slot 8→ L2 of a slot 16→ L3 of a slot 26→ L4 of a slot 34→ L5 of a slot 44→ L6 of a slot 52→ L6 of a slot 7→ L5 of a slot 53→ L4 of a slot 43→ L3 of a slot 35→ L2 of a slot 25→ L1 of a slot 17→ L1 of a slot 9→ L2 of a slot 17→ L3 of a slot 27→ L4 of a slot 35→ L5 of a slot 45→ L6 of a slot 53→ L6 of a slot 8→ L5 of a slot 54→ L4 of a slot 44→ L3 of a slot 36→ L2 of a slot 26→ L1 of a slot 18. The specific connection method can be shown in FIG. 8.

The branch 2 of the V-phase winding, namely a first end V2 of V2-Y2, enters from the first layer L1 of a slot 25 of the winding along a current flow direction, finally flows out from a first layer L1 of a slot 36, and the winding connection sequence is: L1 of a slot 25→ L2 of a slot 33→ L3 of a slot 43→ L4 of a slot 51→ L5 of a slot 7→ L6 of a slot 15→ L6 of a slot 24→ L5 of a slot 16→ L4 of a slot 6→ L3 of a slot 52→ L2 of a slot 42→ L1 of a slot 34→ L1 of a slot 26→ L2 of a slot 34→ L3 of a slot 44→ L4 of a slot 52→ L5 of a slot 8→ L6 of a slot 16→ L6 of a slot 25→ L5 of a slot 17→ L4 of a slot 7→ L3 of a slot 53→ L2 of a slot 43→ L1 of a slot 35→ L1 of a slot 27→ L2 of a slot 35→ L3 of a slot 45→ L4 of a slot 53→ L5 of a slot 9→ L6 of a slot 17→ L6 of a slot 26→ L5 of a slot 18→ L4 of a slot 8→ L3 of a slot 54→ L2 of a slot 44→ L1 of a slot 36. The specific connection method can be shown in FIG. 8.

The branch 3 of the V-phase winding, namely a first end V3 of V3-Y3, enters from the first layer L1 of a slot 43 of the winding along a current flow direction, finally flows out from a first layer L1 of a slot 54, and the winding connection sequence is: L1 of a slot 43→ L2 of a slot 51→ L3 of a slot 7→ L4 of a slot 15→ L5 of a slot 25→ L6 of a slot 33→ L6 of a slot 42→ L5 of a slot 34→ L4 of a slot 24→ L3 of a slot 16→ L2 of a slot 6→ L1 of a slot 52→ L1 of a slot 44→ L2 of a slot 52→ L3 of a slot 8→ L4 of a slot 16→ L5 of a slot 26→ L6 of a slot 34→ L6 of a slot 43→ L5 of a slot 35→ L4 of a slot 25→ L3 of a slot 17→ L2 of a slot 7→ L1 of a slot 53→ L1 of a slot 45→ L2 of a slot 53→ L3 of a slot 9→ L4 of a slot 17→ L5 of a slot 27→ L6 of a slot 35→ L6 of a slot 44→ L5 of a slot 36→ L4 of a slot 26→ L3 of a slot 18→ L2 of a slot 8→ L1 of a slot 54. The specific connection method can be shown in FIG. 8.

In the same way, the W-phase winding and U-phase winding branches are connected in the same way, except that the starting slot is different, that is, a branch 1 (W1-Z1) enters from the first layer L1 of a slot 13 of the winding along a current flow direction and finally flows out from a first layer L1 of a slot 24, a branch 2 of the W-phase winding (W2-Z2) enters from the first layer L1 of a slot 31 of the winding along a current flow direction and finally flows out from a first layer L1 of a slot 42, a branch 3 of the W-phase winding (W3-Z3) enters from the first layer L1 of a slot 49 of the winding along a current flow direction and finally flows out from a first layer L1 of a slot 6. The detailed connection sequence of the three branches is as shown in FIG. 8.

The branch 1 of the W-phase winding, namely a first end W1 of W1-Z1, enters from the first layer L1 of a slot 13 of the winding along a current flow direction, finally flows out from a first layer L1 of a slot 24, and the winding connection sequence is: L1 of a slot 13→ L2 of a slot 21→ L3 of a slot 31→ L4 of a slot 39→ L5 of a slot 49→ L6 of a slot 3→ L6 of a slot 12→ L5 of a slot 4→ L4 of a slot 48→ L3 of a slot 40→ L2 of a slot 30→ L1 of a slot 22→ L1 of a slot 14→ L2 of a slot 22→ L3 of a slot 32→ L4 of a slot 40→ L5 of a slot 50→ L6 of a slot 4→ L6 of a slot 13→ L5 of a slot 5→ L4 of a slot 49→ L3 of a slot 41→ L2 of a slot 31→ L1 of a slot 23→ L1 of a slot 15→ L2 of a slot 23→ L3 of a slot 33→ L4 of a slot 41→ L5 of a slot 51→ L6 of a slot 5→ L6 of a slot 14→ L5 of a slot 6→ L4 of a slot 50→ L3 of a slot 42→ L2 of a slot 32→ L1 of a slot 24. The specific connection method can be shown in FIG. 8.

The branch 2 of the W-phase winding, namely a first end W1 of W2-Z2, enters from the first layer L1 of a slot 31 of the winding along a current flow direction, finally flows out from a first layer L1 of a slot 42, and the winding connection sequence is: L1 of a slot 31→ L2 of a slot 39→ L3 of a slot 49→ L4 of a slot 3→ L5 of a slot 13→ L6 of a slot 21→ L6 of a slot 30→ L5 of a slot 22→ L4 of a slot 12→ L3 of a slot 4→ L2 of a slot 48→ L1 of a slot 40→ L1 of a slot 32→ L2 of a slot 40→ L3 of a slot 50→ L4 of a slot 4→ L5 of a slot 14→ L6 of a slot 22→ L6 of a slot 31→ L5 of a slot 23→ L4 of a slot 13→ L3 of a slot 5→ L2 of a slot 49→ L1 of a slot 41→ L1 of a slot 33→ L2 of a slot 41→ L3 of a slot 51→ L4 of a slot 5→ L5 of a slot 15→L6 of a slot 23→ L6 of a slot 32→ L5 of a slot 24→ L4 of a slot 14→ L3 of a slot 6→ L2 of a slot 50→ L1 of a slot 42. The specific connection method can be shown in FIG. 8.

The branch 3 of the W-phase winding, namely a first end W3 of W3-Z3, enters from the first layer L1 of a slot 49 of the winding along a current flow direction, finally flows out from a first layer L1 of a slot 6, and the winding connection sequence is: L1 of a slot 49→ L2 of a slot 3→ L3 of a slot 13→ L4 of a slot 21→ L5 of a slot 31→ L6 of a slot 39→ L6 of a slot 48→ L5 of a slot 40→ L4 of a slot 30→ L3 of a slot 22→ L2 of a slot 12→ L1 of a slot 4→ L1 of a slot 50→ L2 of a slot 4→ L3 of a slot 14→ L4 of a slot 22→ L5 of a slot 32→ L6 of a slot 40→ L6 of a slot 49→ L5 of a slot 41→ L4 of a slot 31→ L3 of a slot 23→ L2 of a slot 13→ L1 of a slot 5→ L1 of a slot 51→ L2 of a slot 5→ L3 of a slot 15→ L4 of a slot 23→ L5 of a slot 33→ L6 of a slot 41→ L6 of a slot 50→ L5 of a slot 42→ L4 of a slot 32→ L3 of a slot 24→ L2 of a slot 14→ L1 of a slot 6. The specific connection method can be shown in FIG. 8.

As shown in FIG. 7 and FIG. 8, the U phase (composed of U1, U2, U3), the V phase (composed of V1, V2, V3), and the W phase (composed of W1, W2, W3) of the power lead wire are distributed at the first layer of the winding. When the connection at the end of the three-phase power lead wire is arranged in this way, it can be arranged in the end axial space or the end radial space, which is conducive to flexible switching according to the installation space, especially the end axial height can be significantly reduced by utilizing the end radial space. The three star points X1-Y1-Z1, X2-Y2-Z2, and X3-Y3-Z3 are also distributed at the first layer of the winding. In this way, the arrangement can be flexibly switched between the end axial space and the end radial space according to the installation space.

### Second embodiment:

A three-branch balanced winding of a six-pole, fifty-four-slot flat copper wire motor with a short range of Y=8, adopts the delta-connection method, and a number a of parallel branches is 3. The straight portion of the winding in the winding connection structure, the welding end, and the power lead wire end are exactly the same as those in the first embodiment, except that the connection method of the three-phase power wire is different and there is no star point connection. The specific connection method is as shown in FIG. 9.

The U phase of the power lead wire is composed of U1, U2, U3, Y1, Y2, Y3, the V phase is composed of V1, V2, V3, Z1, Z2, Z3, and the W phase is composed of W1, W2, W3, X1, X2, X3.

## Claims

1. A three-branch balanced winding of a six-pole, fifty-four-slot flat copper wire motor, comprising:
a three-phase flat copper wire winding distributed symmetrically along a circumferential direction of a slotted iron core, wherein the three-phase flat copper wire winding comprises a wire straight portion (2) distributed in the iron core slots, a welding end (1) distributed at one side of an end of the iron core (2), and a power lead wire end (3) distributed at another side of the iron core (2); and
spans of the welding end (1) are equal, and heights of the lead welding ends (1) are equal; the power lead wire end (3) is composed of four U-Pin wire types and one I-pin wire type, and a first layer of the power lead wire end (3) is composed of an I-Pin wire type (4) and an U-pin wire type (5) with an equal span; both a second layer and a third layer are composed of the same U-pin wire type (6) with an equal span; both a fourth layer and a fifth layer are composed of the same U-pin wire type (7) with an equal span; a sixth layer is composed of a U-pin wire type (8) with an equal span; the I-Pin wire type (4) comprises a U-phase power wire, a V-phase power wire, a W-phase power wire, and a star point wire when a Y-connection manner is adopted in the winding, and the U-phase power wire, the V-phase power wire, the W-phase power wire, and the star point wire are distributed at an end of the winding at the first layer of the slotted iron core;
no other protruding special-shaped wires and bridge wires are provided.

2. The three-branch balanced winding of the six-pole, fifty-four-slot flat copper wire motor according to claim 1, wherein:
the three-phase flat copper wire winding is a six-layer winding, and each phase winding is composed of three branches connected in parallel; a connection sequence of each parallel branch is configured as follows: entering from a first layer L1 of the slotted iron core;
passing through a second layer L2, a third layer L3, a fourth layer L4, a fifth layer L5, and a sixth layer L6 along a forward direction in sequence; passing through the sixth layer L6, the fifth layer L5, the fourth layer L4, the third layer L3, the second layer L2, the first layer L1 along a reverse direction in sequence; passing through the first layer L1, the second layer L2, the third layer L3, the fourth layer L4, the fifth layer L5, and the sixth layer L6 along the forward direction; passing through the sixth layer L6, the fifth layer L5, the fourth layer L4, the third layer L3, the second layer L2, the first layer L1 along the reverse direction; passing through the first layer L1, the second layer L2, the third layer L3, the fourth layer L4, the fifth layer L5, and the sixth layer L6 along the forward direction; then passing through the sixth layer L6, the fifth layer L5, the fourth layer L4, the third layer L3, and the second layer L2 along the reverse direction; finally leading out from the first layer L1.

3. The three-branch balanced winding of the six-pole, fifty-four-slot flat copper wire motor according to claim 1 or 2, wherein:
the U-phase power wire, the V-phase power wire and the W-phase of the three-phase flat copper wire winding is configured to adopt a Y-connection manner or a delta connection manner; and
the three-phase flat copper wire winding is configured to adopt a short span with a span Y of eight, a full span with a span Y of nine, or a long span with a span Y of ten.

4. The three-branch balanced winding of the six-pole fifty-four-slot flat copper wire motor according to claim 1 or 2, wherein the U-phase power wire, the V-phase power wire, the W-phase power wire, the star point wire are evenly distributed at the end of the winding at the first layer of the slotted iron core when the winding is configured to adopt a Y-connection manner.

5. The three-branch balanced winding of the six-pole, fifty-four-slot flat copper wire motor according to claim 3, wherein the U-phase power wire, the V-phase power wire, the W-phase power wire, the star point wire are evenly distributed at the end of the winding at the first layer of the slotted iron core when the winding is configured to adopt a Y-connection manner.

6. A method of using the three-branch balanced winding of the six-pole fifty-four-slot flat copper wire motor according to claim 1 or 2, wherein the method is implemented in sequence as follows:
a branch 1 of the U-phase winding, namely a first end U1 of U1-X1, enters from the first layer L1 of a slot 1 of the winding along a current flow direction, finally flows out from a first layer L1 of a slot 12, and the winding connection sequence is: L1 of a slot 1→ L2 of a slot 9→ L3 of a slot 19→ L4 of a slot 27→ L5 of a slot 37→ L6 of a slot 45→ L6 of a slot 54→ L5 of a slot 46→ L4 of a slot 36→ L3 of a slot 28→ L2 of a slot 18→ L1 of a slot 10→ L1 of a slot 2→ L2 of a slot 10→ L3 of a slot 20→ L4 of a slot 28→ L5 of a slot 38→ L6 of a slot 46→ L6 of a slot 1→ L5 of a slot 47→ L4 of a slot 37→ L3 of a slot 29→ L2 of a slot 19→ L1 of a slot 11→ L1 of a slot 3→ L2 of a slot 11→ L3 of a slot 21→ L4 of a slot 29→ L5 of a slot 39→ L6 of a slot 47→ L6 of a slot 2→ L5 of a slot 48→ L4 of a slot 38→ L3 of a slot 30→ L2 of a slot 20→ L1 of a slot 12;
a branch 2 of the U-phase winding, namely a first end U2 of U2-X2, enters from the first layer L1 of a slot 19 of the winding along a current flow direction, finally flows out from a first layer L1 of a slot 30, and the winding connection sequence is: L1 of a slot 19→ L2 of a slot 27→ L3 of a slot 37→ L4 of a slot 45→ L5 of a slot 1→ L6 of a slot 9→ L6 of a slot 18→ L5 of a slot 10→ L4 of a slot 54→ L3 of a slot 46→ L2 of a slot 36→ L1 of a slot 28→ L1 of a slot 20→ L2 of a slot 28→ L3 of a slot 38→ L4 of a slot 46→ L5 of a slot 2→ L6 of a slot 10→ L6 of a slot 19→ L5 of a slot 11→ L4 of a slot 1→ L3 of a slot 47→ L2 of a slot 37→ L1 of a slot 29→ L1 of a slot 21→ L2 of a slot 29→ L3 of a slot 39→ L4 of a slot 47→ L5 of a slot 3→ L6 of a slot 11→ L6 of a slot 20→ L5 of a slot 12→ L4 of a slot 2→ L3 of a slot 48→ L2 of a slot 38→ L1 of a slot 30;
a branch 3 of the U-phase winding, namely a first end U1 of U3-X3, enters from the first layer L1 of a slot 37 of the winding along a current flow direction, finally flows out from a first layer L1 of a slot 48, and the winding connection sequence is: L1 of a slot 37→ L2 of a slot 45→ L3 of a slot 1→ L4 of a slot 9→ L5 of a slot 19→ L6 of a slot 27→ L6 of a slot 36→ L5 of a slot 28→ L4 of a slot 18→ L3 of a slot 10→ L2 of a slot 54→ L1 of a slot 46→ L1 of a slot 38→ L2 of a slot 46→ L3 of a slot 2→ L4 of a slot 10→ L5 of a slot 20→ L6 of a slot 28→ L6 of a slot 37→ L5 of a slot 29→ L4 of a slot 19→ L3 of a slot 11→ L2 of a slot 1→ L1 of a slot 47→ L1 of a slot 39→ L2 of a slot 47→ L3 of a slot 3→ L4 of a slot 11→ L5 of a slot 21→ L6 of a slot 29→ L6 of a slot 38→ L5 of a slot 30→ L4 of a slot 20→ L3 of a slot 12→ L2 of a slot 2→ L1 of a slot 48;
a branch 1 of the V-phase winding, namely a first end V1 of V1-Y1, enters from the first layer L1 of a slot 7 of the winding along a current flow direction, finally flows out from a first layer L1 of a slot 18, and the winding connection sequence is: L1 of a slot 7→ L2 of a slot 15→ L3 of a slot 25→ L4 of a slot 33→ L5 of a slot 43→ L6 of a slot 51→ L6 of a slot 6→ L5 of a slot 52→ L4 of a slot 42→ L3 of a slot 34→ L2 of a slot 24→ L1 of a slot 16→ L1 of a slot 8→ L2 of a slot 16→ L3 of a slot 26→ L4 of a slot 34→ L5 of a slot 44→ L6 of a slot 52→ L6 of a slot 7→ L5 of a slot 53→ L4 of a slot 43→ L3 of a slot 35→ L2 of a slot 25→ L1 of a slot 17→ L1 of a slot 9→ L2 of a slot 17→ L3 of a slot 27→ L4 of a slot 35→ L5 of a slot 45→ L6 of a slot 53→ L6 of a slot 8→ L5 of a slot 54→ L4 of a slot 44→ L3 of a slot 36→ L2 of a slot 26→ L1 of a slot 18;
a branch 2 of the V-phase winding, namely a first end V2 of V2-Y2, enters from the first layer L1 of a slot 25 of the winding along a current flow direction, finally flows out from a first layer L1 of a slot 36, and the winding connection sequence is: L1 of a slot 25→ L2 of a slot 33→ L3 of a slot 43→ L4 of a slot 51→ L5 of a slot 7→ L6 of a slot 15→ L6 of a slot 24→ L5 of a slot 16→ L4 of a slot 6→ L3 of a slot 52→ L2 of a slot 42→ L1 of a slot 34→ L1 of a slot 26→ L2 of a slot 34→ L3 of a slot 44→ L4 of a slot 52→ L5 of a slot 8→ L6 of a slot 16→ L6 of a slot 25→ L5 of a slot 17→ L4 of a slot 7→ L3 of a slot 53→ L2 of a slot 43→ L1 of a slot 35→ L1 of a slot 27→ L2 of a slot 35→ L3 of a slot 45→ L4 of a slot 53→ L5 of a slot 9→ L6 of a slot 17→ L6 of a slot 26→ L5 of a slot 18→ L4 of a slot 8→ L3 of a slot 54→ L2 of a slot 44→ L1 of a slot 36;
a branch 3 of the V-phase winding, namely a first end V3 of V3-Y3, enters from the first layer L1 of a slot 43 of the winding along a current flow direction, finally flows out from a first layer L1 of a slot 54, and the winding connection sequence is: L1 of a slot 43→ L2 of a slot 51→ L3 of a slot 7→ L4 of a slot 15→ L5 of a slot 25→ L6 of a slot 33→ L6 of a slot 42→ L5 of a slot 34→ L4 of a slot 24→ L3 of a slot 16→ L2 of a slot 6→ L1 of a slot 52→ L1 of a slot 44→ L2 of a slot 52→ L3 of a slot 8→ L4 of a slot 16→ L5 of a slot 26→ L6 of a slot 34→ L6 of a slot 43→ L5 of a slot 35→ L4 of a slot 25→ L3 of a slot 17→ L2 of a slot 7→ L1 of a slot 53→ L1 of a slot 45→ L2 of a slot 53→ L3 of a slot 9→ L4 of a slot 17→ L5 of a slot 27→ L6 of a slot 35→ L6 of a slot 44→ L5 of a slot 36→ L4 of a slot 26→ L3 of a slot 18→ L2 of a slot 8→ L1 of a slot 54;
a branch 1 of the W-phase winding, namely a first end W1 of W1-Z1, enters from the first layer L1 of a slot 13 of the winding along a current flow direction, finally flows out from a first layer L1 of a slot 24, and the winding connection sequence is: L1 of a slot 13→ L2 of a slot 21→ L3 of a slot 31→ L4 of a slot 39→ L5 of a slot 49→ L6 of a slot 3→ L6 of a slot 12→ L5 of a slot 4→ L4 of a slot 48→ L3 of a slot 40→ L2 of a slot 30→ L1 of a slot 22→ L1 of a slot 14→ L2 of a slot 22→ L3 of a slot 32→ L4 of a slot 40→ L5 of a slot 50→ L6 of a slot 4→ L6 of a slot 13→ L5 of a slot 5→ L4 of a slot 49→ L3 of a slot 41→ L2 of a slot 31→ L1 of a slot 23→ L1 of a slot 15→ L2 of a slot 23→ L3 of a slot 33→ L4 of a slot 41→ L5 of a slot 51→ L6 of a slot 5→ L6 of a slot 14→ L5 of a slot 6→ L4 of a slot 50→ L3 of a slot 42→ L2 of a slot 32→ L1 of a slot 24;
a branch 2 of the W-phase winding, namely a first end W1 of W2-Z2, enters from the first layer L1 of a slot 31 of the winding along a current flow direction, finally flows out from a first layer L1 of a slot 42, and the winding connection sequence is: L1 of a slot 31→ L2 of a slot 39→ L3 of a slot 49→ L4 of a slot 3→ L5 of a slot 13→ L6 of a slot 21→ L6 of a slot 30→ L5 of a slot 22→ L4 of a slot 12→ L3 of a slot 4→ L2 of a slot 48→ L1 of a slot 40→ L1 of a slot 32→ L2 of a slot 40→ L3 of a slot 50→ L4 of a slot 4→ L5 of a slot 14→ L6 of a slot 22→ L6 of a slot 31→ L5 of a slot 23→ L4 of a slot 13→ L3 of a slot 5→ L2 of a slot 49→ L1 of a slot 41→ L1 of a slot 33→ L2 of a slot 41→ L3 of a slot 51→ L4 of a slot 5→ L5 of a slot 15→ L6 of a slot 23→ L6 of a slot 32→ L5 of a slot 24→ L4 of a slot 14→ L3 of a slot 6→ L2 of a slot 50→ L1 of a slot 42;
a branch 3 of the W-phase winding, namely a first end W3 of W3-Z3, enters from the first layer L1 of a slot 49 of the winding along a current flow direction, finally flows out from a first layer L1 of a slot 6, and the winding connection sequence is: L1 of a slot 49→ L2 of a slot 3→ L3 of a slot 13→ L4 of a slot 21→ L5 of a slot 31→ L6 of a slot 39→ L6 of a slot 48→ L5 of a slot 40→ L4 of a slot 30→ L3 of a slot 22→ L2 of a slot 12→ L1 of a slot 4→ L1 of a slot 50→ L2 of a slot 4→ L3 of a slot 14→ L4 of a slot 22→ L5 of a slot 32→ L6 of a slot 40→ L6 of a slot 49→ L5 of a slot 41→ L4 of a slot 31→ L3 of a slot 23→ L2 of a slot 13→ L1 of a slot 5→ L1 of a slot 51→ L2 of a slot 5→ L3 of a slot 15→ L4 of a slot 23→ L5 of a slot 33→ L6 of a slot 41→ L6 of a slot 50→ L5 of a slot 42→ L4 of a slot 32→ L3 of a slot 24→ L2 of a slot 14→ L1 of a slot 6.

7. The method of using the three-branch balanced winding of the six-pole fifty-four-slot flat copper wire motor according to claim 3, wherein the method is implemented in sequence as follows:
a branch 1 of the U-phase winding, namely a first end U1 of U1-X1, enters from the first layer L1 of a slot 1 of the winding along a current flow direction, finally flows out from a first layer L1 of a slot 12, and the winding connection sequence is: L1 of a slot 1→ L2 of a slot 9→ L3 of a slot 19→ L4 of a slot 27→ L5 of a slot 37→ L6 of a slot 45→ L6 of a slot 54→ L5 of a slot 46→ L4 of a slot 36→ L3 of a slot 28→ L2 of a slot 18→ L1 of a slot 10→ L1 of a slot 2→ L2 of a slot 10→ L3 of a slot 20→ L4 of a slot 28→ L5 of a slot 38→ L6 of a slot 46→ L6 of a slot 1→ L5 of a slot 47→ L4 of a slot 37→ L3 of a slot 29→ L2 of a slot 19→ L1 of a slot 11→ L1 of a slot 3→ L2 of a slot 11→ L3 of a slot 21→ L4 of a slot 29→ L5 of a slot 39→ L6 of a slot 47→ L6 of a slot 2→ L5 of a slot 48→ L4 of a slot 38→ L3 of a slot 30→ L2 of a slot 20→ L1 of a slot 12;
a branch 2 of the U-phase winding, namely a first end U2 of U2-X2, enters from the first layer L1 of a slot 19 of the winding along a current flow direction, finally flows out from a first layer L1 of a slot 30, and the winding connection sequence is: L1 of a slot 19→ L2 of a slot 27→ L3 of a slot 37→ L4 of a slot 45→ L5 of a slot 1→ L6 of a slot 9→ L6 of a slot 18→ L5 of a slot 10→ L4 of a slot 54→ L3 of a slot 46→ L2 of a slot 36→ L1 of a slot 28→ L1 of a slot 20→ L2 of a slot 28→ L3 of a slot 38→ L4 of a slot 46→ L5 of a slot 2→ L6 of a slot 10→ L6 of a slot 19→ L5 of a slot 11→ L4 of a slot 1→ L3 of a slot 47→ L2 of a slot 37→ L1 of a slot 29→ L1 of a slot 21→ L2 of a slot 29→ L3 of a slot 39→ L4 of a slot 47→ L5 of a slot 3→ L6 of a slot 11→ L6 of a slot 20→ L5 of a slot 12→ L4 of a slot 2→ L3 of a slot 48→ L2 of a slot 38→ L1 of a slot 30;
a branch 3 of the U-phase winding, namely a first end U1 of U3-X3, enters from the first layer L1 of a slot 37 of the winding along a current flow direction, finally flows out from a first layer L1 of a slot 48, and the winding connection sequence is: L1 of a slot 37→ L2 of a slot 45→ L3 of a slot 1→ L4 of a slot 9→ L5 of a slot 19→ L6 of a slot 27→ L6 of a slot 36→ L5 of a slot 28→ L4 of a slot 18→ L3 of a slot 10→ L2 of a slot 54→ L1 of a slot 46→ L1 of a slot 38→ L2 of a slot 46→ L3 of a slot 2→ L4 of a slot 10→ L5 of a slot 20→ L6 of a slot 28→ L6 of a slot 37→ L5 of a slot 29→ L4 of a slot 19→ L3 of a slot 11→ L2 of a slot 1→ L1 of a slot 47→ L1 of a slot 39→ L2 of a slot 47→ L3 of a slot 3→ L4 of a slot 11→ L5 of a slot 21→ L6 of a slot 29→ L6 of a slot 38→ L5 of a slot 30→ L4 of a slot 20→ L3 of a slot 12→ L2 of a slot 2→ L1 of a slot 48;
a branch 1 of the V-phase winding, namely a first end V1 of V1-Y1, enters from the first layer L1 of a slot 7 of the winding along a current flow direction, finally flows out from a first layer L1 of a slot 18, and the winding connection sequence is: L1 of a slot 7→ L2 of a slot 15→ L3 of a slot 25→ L4 of a slot 33→ L5 of a slot 43→ L6 of a slot 51→ L6 of a slot 6→ L5 of a slot 52→ L4 of a slot 42→ L3 of a slot 34→ L2 of a slot 24→ L1 of a slot 16→ L1 of a slot 8→ L2 of a slot 16→ L3 of a slot 26→ L4 of a slot 34→ L5 of a slot 44→ L6 of a slot 52→ L6 of a slot 7→ L5 of a slot 53→ L4 of a slot 43→ L3 of a slot 35→ L2 of a slot 25→ L1 of a slot 17→ L1 of a slot 9→ L2 of a slot 17→ L3 of a slot 27→ L4 of a slot 35→ L5 of a slot 45→ L6 of a slot 53→ L6 of a slot 8→ L5 of a slot 54→ L4 of a slot 44→ L3 of a slot 36→ L2 of a slot 26→ L1 of a slot 18;
a branch 2 of the V-phase winding, namely a first end V2 of V2-Y2, enters from the first layer L1 of a slot 25 of the winding along a current flow direction, finally flows out from a first layer L1 of a slot 36, and the winding connection sequence is: L1 of a slot 25→ L2 of a slot 33→ L3 of a slot 43→ L4 of a slot 51→ L5 of a slot 7→ L6 of a slot 15→ L6 of a slot 24→ L5 of a slot 16→ L4 of a slot 6→ L3 of a slot 52→ L2 of a slot 42→ L1 of a slot 34→ L1 of a slot 26→ L2 of a slot 34→ L3 of a slot 44→ L4 of a slot 52→ L5 of a slot 8→ L6 of a slot 16→ L6 of a slot 25→ L5 of a slot 17→ L4 of a slot 7→ L3 of a slot 53→ L2 of a slot 43→ L1 of a slot 35→ L1 of a slot 27→ L2 of a slot 35→ L3 of a slot 45→ L4 of a slot 53→ L5 of a slot 9→ L6 of a slot 17→ L6 of a slot 26→ L5 of a slot 18→ L4 of a slot 8→ L3 of a slot 54→ L2 of a slot 44→ L1 of a slot 36;
a branch 3 of the V-phase winding, namely a first end V3 of V3-Y3, enters from the first layer L1 of a slot 43 of the winding along a current flow direction, finally flows out from a first layer L1 of a slot 54, and the winding connection sequence is: L1 of a slot 43→ L2 of a slot 51→ L3 of a slot 7→ L4 of a slot 15→ L5 of a slot 25→ L6 of a slot 33→ L6 of a slot 42→ L5 of a slot 34→ L4 of a slot 24→ L3 of a slot 16→ L2 of a slot 6→ L1 of a slot 52→ L1 of a slot 44→ L2 of a slot 52→ L3 of a slot 8→ L4 of a slot 16→ L5 of a slot 26→ L6 of a slot 34→ L6 of a slot 43→ L5 of a slot 35→ L4 of a slot 25→ L3 of a slot 17→ L2 of a slot 7→ L1 of a slot 53→ L1 of a slot 45→ L2 of a slot 53→ L3 of a slot 9→ L4 of a slot 17→ L5 of a slot 27→ L6 of a slot 35→ L6 of a slot 44→ L5 of a slot 36→ L4 of a slot 26→ L3 of a slot 18→ L2 of a slot 8→ L1 of a slot 54;
a branch 1 of the W-phase winding, namely a first end W1 of W1-Z1, enters from the first layer L1 of a slot 13 of the winding along a current flow direction, finally flows out from a first layer L1 of a slot 24, and the winding connection sequence is: L1 of a slot 13→ L2 of a slot 21→ L3 of a slot 31→ L4 of a slot 39→ L5 of a slot 49→ L6 of a slot 3→ L6 of a slot 12→ L5 of a slot 4→ L4 of a slot 48→ L3 of a slot 40→ L2 of a slot 30→ L1 of a slot 22→ L1 of a slot 14→ L2 of a slot 22→ L3 of a slot 32→ L4 of a slot 40→ L5 of a slot 50→ L6 of a slot 4→ L6 of a slot 13→ L5 of a slot 5→ L4 of a slot 49→ L3 of a slot 41→ L2 of a slot 31→ L1 of a slot 23→ L1 of a slot 15→ L2 of a slot 23→ L3 of a slot 33→ L4 of a slot 41→ L5 of a slot 51→ L6 of a slot 5→ L6 of a slot 14→ L5 of a slot 6→ L4 of a slot 50→ L3 of a slot 42→ L2 of a slot 32→ L1 of a slot 24;
a branch 2 of the W-phase winding, namely a first end W2 of W2-Z2, enters from the first layer L1 of a slot 31 of the winding along a current flow direction, finally flows out from a first layer L1 of a slot 42, and the winding connection sequence is: L1 of a slot 31→ L2 of a slot 39→ L3 of a slot 49→ L4 of a slot 3→ L5 of a slot 13→ L6 of a slot 21→ L6 of a slot 30→ L5 of a slot 22→ L4 of a slot 12→ L3 of a slot 4→ L2 of a slot 48→ L1 of a slot 40→ L1 of a slot 32→ L2 of a slot 40→ L3 of a slot 50→ L4 of a slot 4→ L5 of a slot 14→ L6 of a slot 22→ L6 of a slot 31→ L5 of a slot 23→ L4 of a slot 13→ L3 of a slot 5→ L2 of a slot 49→ L1 of a slot 41→ L1 of a slot 33→ L2 of a slot 41→ L3 of a slot 51→ L4 of a slot 5→ L5 of a slot 15→ L6 of a slot 23→ L6 of a slot 32→ L5 of a slot 24→ L4 of a slot 14→ L3 of a slot 6→ L2 of a slot 50→ L1 of a slot 42;
a branch 3 of the W-phase winding, namely a first end W3 of W3-Z3, enters from the first layer L1 of a slot 49 of the winding along a current flow direction, finally flows out from a first layer L1 of a slot 6, and the winding connection sequence is: L1 of a slot 49→ L2 of a slot 3→ L3 of a slot 13→ L4 of a slot 21→ L5 of a slot 31→ L6 of a slot 39→ L6 of a slot 48→ L5 of a slot 40→ L4 of a slot 30→ L3 of a slot 22→ L2 of a slot 12→ L1 of a slot 4→ L1 of a slot 50→ L2 of a slot 4→ L3 of a slot 14→ L4 of a slot 22→ L5 of a slot 32→ L6 of a slot 40→ L6 of a slot 49→ L5 of a slot 41→ L4 of a slot 31→ L3 of a slot 23→ L2 of a slot 13→ L1 of a slot 5→ L1 of a slot 51→ L2 of a slot 5→ L3 of a slot 15→ L4 of a slot 23→ L5 of a slot 33→ L6 of a slot 41→ L6 of a slot 50→ L5 of a slot 42→ L4 of a slot 32→ L3 of a slot 24→ L2 of a slot 14→ L1 of a slot 6.

8. The method of using the three-branch balanced winding of the six-pole fifty-four-slot flat copper wire motor according to claim 4, wherein the method is implemented in sequence as follows:
a branch 1 of the U-phase winding, namely a first end U1 of U1-X1, enters from the first layer L1 of a slot 1 of the winding along a current flow direction, finally flows out from a first layer L1 of a slot 12, and the winding connection sequence is: L1 of a slot 1→ L2 of a slot 9→ L3 of a slot 19→ L4 of a slot 27→ L5 of a slot 37→ L6 of a slot 45→ L6 of a slot 54→ L5 of a slot 46→ L4 of a slot 36→ L3 of a slot 28→ L2 of a slot 18→ L1 of a slot 10→ L1 of a slot 2→ L2 of a slot 10→ L3 of a slot 20→ L4 of a slot 28→ L5 of a slot 38→ L6 of a slot 46→ L6 of a slot 1→ L5 of a slot 47→ L4 of a slot 37→ L3 of a slot 29→ L2 of a slot 19→ L1 of a slot 11→ L1 of a slot 3→ L2 of a slot 11→ L3 of a slot 21→ L4 of a slot 29→ L5 of a slot 39→ L6 of a slot 47→ L6 of a slot 2→ L5 of a slot 48→ L4 of a slot 38→ L3 of a slot 30→ L2 of a slot 20→ L1 of a slot 12;
a branch 2 of the U-phase winding, namely a first end U2 of U2-X2, enters from the first layer L1 of a slot 19 of the winding along a current flow direction, finally flows out from a first layer L1 of a slot 30, and the winding connection sequence is: L1 of a slot 19→ L2 of a slot 27→ L3 of a slot 37→ L4 of a slot 45→ L5 of a slot 1→ L6 of a slot 9→ L6 of a slot 18→ L5 of a slot 10→ L4 of a slot 54→ L3 of a slot 46→ L2 of a slot 36→ L1 of a slot 28→ L1 of a slot 20→ L2 of a slot 28→ L3 of a slot 38→ L4 of a slot 46→ L5 of a slot 2→ L6 of a slot 10→ L6 of a slot 19→ L5 of a slot 11→ L4 of a slot 1→ L3 of a slot 47→ L2 of a slot 37→ L1 of a slot 29→ L1 of a slot 21→ L2 of a slot 29→ L3 of a slot 39→ L4 of a slot 47→ L5 of a slot 3→ L6 of a slot 11→ L6 of a slot 20→ L5 of a slot 12→ L4 of a slot 2→ L3 of a slot 48→ L2 of a slot 38→ L1 of a slot 30;
a branch 3 of the U-phase winding, namely a first end U1 of U3-X3, enters from the first layer L1 of a slot 37 of the winding along a current flow direction, finally flows out from a first layer L1 of a slot 48, and the winding connection sequence is: L1 of a slot 37→ L2 of a slot 45→ L3 of a slot 1→ L4 of a slot 9→ L5 of a slot 19→ L6 of a slot 27→ L6 of a slot 36→ L5 of a slot 28→ L4 of a slot 18→ L3 of a slot 10→ L2 of a slot 54→ L1 of a slot 46→ L1 of a slot 38→ L2 of a slot 46→ L3 of a slot 2→ L4 of a slot 10→ L5 of a slot 20→ L6 of a slot 28→ L6 of a slot 37→ L5 of a slot 29→ L4 of a slot 19→ L3 of a slot 11→ L2 of a slot 1→ L1 of a slot 47→ L1 of a slot 39→ L2 of a slot 47→ L3 of a slot 3→ L4 of a slot 11→ L5 of a slot 21→ L6 of a slot 29→ L6 of a slot 38→ L5 of a slot 30→ L4 of a slot 20→ L3 of a slot 12→ L2 of a slot 2→ L1 of a slot 48;
a branch 1 of the V-phase winding, namely a first end V1 of V1-Y1, enters from the first layer L1 of a slot 7 of the winding along a current flow direction, finally flows out from a first layer L1 of a slot 18, and the winding connection sequence is: L1 of a slot 7→ L2 of a slot 15→ L3 of a slot 25→ L4 of a slot 33→ L5 of a slot 43→ L6 of a slot 51→ L6 of a slot 6→ L5 of a slot 52→ L4 of a slot 42→ L3 of a slot 34→ L2 of a slot 24→ L1 of a slot 16→ L1 of a slot 8→ L2 of a slot 16→ L3 of a slot 26→ L4 of a slot 34→ L5 of a slot 44→ L6 of a slot 52→ L6 of a slot 7→ L5 of a slot 53→ L4 of a slot 43→ L3 of a slot 35→ L2 of a slot 25→ L1 of a slot 17→ L1 of a slot 9→ L2 of a slot 17→ L3 of a slot 27→ L4 of a slot 35→ L5 of a slot 45→ L6 of a slot 53→ L6 of a slot 8→ L5 of a slot 54→ L4 of a slot 44→ L3 of a slot 36→ L2 of a slot 26→ L1 of a slot 18;
a branch 2 of the V-phase winding, namely a first end V2 of V2-Y2, enters from the first layer L1 of a slot 25 of the winding along a current flow direction, finally flows out from a first layer L1 of a slot 36, and the winding connection sequence is: L1 of a slot 25→ L2 of a slot 33→ L3 of a slot 43→ L4 of a slot 51→ L5 of a slot 7→ L6 of a slot 15→ L6 of a slot 24→ L5 of a slot 16→ L4 of a slot 6→ L3 of a slot 52→ L2 of a slot 42→ L1 of a slot 34→ L1 of a slot 26→ L2 of a slot 34→ L3 of a slot 44→ L4 of a slot 52→ L5 of a slot 8→ L6 of a slot 16→ L6 of a slot 25→ L5 of a slot 17→ L4 of a slot 7→ L3 of a slot 53→ L2 of a slot 43→ L1 of a slot 35→ L1 of a slot 27→ L2 of a slot 35→ L3 of a slot 45→ L4 of a slot 53→ L5 of a slot 9→ L6 of a slot 17→ L6 of a slot 26→ L5 of a slot 18→ L4 of a slot 8→ L3 of a slot 54→ L2 of a slot 44→ L1 of a slot 36;
a branch 3 of the V-phase winding, namely a first end V3 of V3-Y3, enters from the first layer L1 of a slot 43 of the winding along a current flow direction, finally flows out from a first layer L1 of a slot 54, and the winding connection sequence is: L1 of a slot 43→ L2 of a slot 51→ L3 of a slot 7→ L4 of a slot 15→ L5 of a slot 25→ L6 of a slot 33→ L6 of a slot 42→ L5 of a slot 34→ L4 of a slot 24→ L3 of a slot 16→ L2 of a slot 6→ L1 of a slot 52→ L1 of a slot 44→ L2 of a slot 52→ L3 of a slot 8→ L4 of a slot 16→ L5 of a slot 26→ L6 of a slot 34→ L6 of a slot 43→ L5 of a slot 35→ L4 of a slot 25→ L3 of a slot 17→ L2 of a slot 7→ L1 of a slot 53→ L1 of a slot 45→ L2 of a slot 53→ L3 of a slot 9→ L4 of a slot 17→ L5 of a slot 27→ L6 of a slot 35→ L6 of a slot 44→ L5 of a slot 36→ L4 of a slot 26→ L3 of a slot 18→ L2 of a slot 8→ L1 of a slot 54;
a branch 1 of the W-phase winding, namely a first end W1 of W1-Z1, enters from the first layer L1 of a slot 13 of the winding along a current flow direction, finally flows out from a first layer L1 of a slot 24, and the winding connection sequence is: L1 of a slot 13→ L2 of a slot 21→ L3 of a slot 31→ L4 of a slot 39→ L5 of a slot 49→ L6 of a slot 3→ L6 of a slot 12→ L5 of a slot 4→ L4 of a slot 48→ L3 of a slot 40→ L2 of a slot 30→ L1 of a slot 22→ L1 of a slot 14→ L2 of a slot 22→ L3 of a slot 32→ L4 of a slot 40→ L5 of a slot 50→ L6 of a slot 4→ L6 of a slot 13→ L5 of a slot 5→ L4 of a slot 49→ L3 of a slot 41→ L2 of a slot 31→ L1 of a slot 23→ L1 of a slot 15→ L2 of a slot 23→ L3 of a slot 33→ L4 of a slot 41→ L5 of a slot 51→ L6 of a slot 5→ L6 of a slot 14→ L5 of a slot 6→ L4 of a slot 50→ L3 of a slot 42→ L2 of a slot 32→ L1 of a slot 24;
a branch 2 of the W-phase winding, namely a first end W2 of W2-Z2, enters from the first layer L1 of a slot 31 of the winding along a current flow direction, finally flows out from a first layer L1 of a slot 42, and the winding connection sequence is: L1 of a slot 31→ L2 of a slot 39→ L3 of a slot 49→ L4 of a slot 3→ L5 of a slot 13→ L6 of a slot 21→ L6 of a slot 30→ L5 of a slot 22→ L4 of a slot 12→ L3 of a slot 4→ L2 of a slot 48→ L1 of a slot 40→ L1 of a slot 32→ L2 of a slot 40→ L3 of a slot 50→ L4 of a slot 4→ L5 of a slot 14→ L6 of a slot 22→ L6 of a slot 31→ L5 of a slot 23→ L4 of a slot 13→ L3 of a slot 5→ L2 of a slot 49→ L1 of a slot 41→ L1 of a slot 33→ L2 of a slot 41→ L3 of a slot 51→ L4 of a slot 5→ L5 of a slot 15→ L6 of a slot 23→ L6 of a slot 32→ L5 of a slot 24→ L4 of a slot 14→ L3 of a slot 6→ L2 of a slot 50→ L1 of a slot 42;
a branch 3 of the W-phase winding, namely a first end W3 of W3-Z3, enters from the first layer L1 of a slot 49 of the winding along a current flow direction, finally flows out from a first layer L1 of a slot 6, and the winding connection sequence is: L1 of a slot 49→ L2 of a slot 3→ L3 of a slot 13→ L4 of a slot 21→ L5 of a slot 31→ L6 of a slot 39→ L6 of a slot 48→ L5 of a slot 40→ L4 of a slot 30→ L3 of a slot 22→ L2 of a slot 12→ L1 of a slot 4→ L1 of a slot 50→ L2 of a slot 4→ L3 of a slot 14→ L4 of a slot 22→ L5 of a slot 32→ L6 of a slot 40→ L6 of a slot 49→ L5 of a slot 41→ L4 of a slot 31→ L3 of a slot 23→ L2 of a slot 13→ L1 of a slot 5→ L1 of a slot 51→ L2 of a slot 5→ L3 of a slot 15→ L4 of a slot 23→ L5 of a slot 33→ L6 of a slot 41→ L6 of a slot 50→ L5 of a slot 42→ L4 of a slot 32→ L3 of a slot 24→ L2 of a slot 14→ L1 of a slot 6.

9. The method of using the three-branch balanced winding of the six-pole fifty-four-slot flat copper wire motor according to claim 5, wherein the method is implemented in sequence as follows:
a branch 1 of the U-phase winding, namely a first end U1 of U1-X1, enters from the first layer L1 of a slot 1 of the winding along a current flow direction, finally flows out from a first layer L1 of a slot 12, and the winding connection sequence is: L1 of a slot 1→ L2 of a slot 9→ L3 of a slot 19→ L4 of a slot 27→ L5 of a slot 37→ L6 of a slot 45→ L6 of a slot 54→ L5 of a slot 46→ L4 of a slot 36→ L3 of a slot 28→ L2 of a slot 18→ L1 of a slot 10→ L1 of a slot 2→ L2 of a slot 10→ L3 of a slot 20→ L4 of a slot 28→ L5 of a slot 38→ L6 of a slot 46→ L6 of a slot 1→ L5 of a slot 47→ L4 of a slot 37→ L3 of a slot 29→ L2 of a slot 19→ L1 of a slot 11→ L1 of a slot 3→ L2 of a slot 11→ L3 of a slot 21→ L4 of a slot 29→ L5 of a slot 39→ L6 of a slot 47→ L6 of a slot 2→ L5 of a slot 48→ L4 of a slot 38→ L3 of a slot 30→ L2 of a slot 20→ L1 of a slot 12;
a branch 2 of the U-phase winding, namely a first end U2 of U2-X2, enters from the first layer L1 of a slot 19 of the winding along a current flow direction, finally flows out from a first layer L1 of a slot 30, and the winding connection sequence is: L1 of a slot 19→ L2 of a slot 27→ L3 of a slot 37→ L4 of a slot 45→ L5 of a slot 1→ L6 of a slot 9→ L6 of a slot 18→ L5 of a slot 10→ L4 of a slot 54→ L3 of a slot 46→ L2 of a slot 36→ L1 of a slot 28→ L1 of a slot 20→ L2 of a slot 28→ L3 of a slot 38→ L4 of a slot 46→ L5 of a slot 2→ L6 of a slot 10→ L6 of a slot 19→ L5 of a slot 11→ L4 of a slot 1→ L3 of a slot 47→ L2 of a slot 37→ L1 of a slot 29→ L1 of a slot 21→ L2 of a slot 29→ L3 of a slot 39→ L4 of a slot 47→ L5 of a slot 3→ L6 of a slot 11→ L6 of a slot 20→ L5 of a slot 12→ L4 of a slot 2→ L3 of a slot 48→ L2 of a slot 38→ L1 of a slot 30;
a branch 3 of the U-phase winding, namely a first end U1 of U3-X3, enters from the first layer L1 of a slot 37 of the winding along a current flow direction, finally flows out from a first layer L1 of a slot 48, and the winding connection sequence is: L1 of a slot 37→ L2 of a slot 45→ L3 of a slot 1→ L4 of a slot 9→ L5 of a slot 19→ L6 of a slot 27→ L6 of a slot 36→ L5 of a slot 28→ L4 of a slot 18→ L3 of a slot 10→ L2 of a slot 54→ L1 of a slot 46→ L1 of a slot 38→ L2 of a slot 46→ L3 of a slot 2→ L4 of a slot 10→ L5 of a slot 20→ L6 of a slot 28→ L6 of a slot 37→ L5 of a slot 29→ L4 of a slot 19→ L3 of a slot 11→ L2 of a slot 1→ L1 of a slot 47→ L1 of a slot 39→ L2 of a slot 47→ L3 of a slot 3→ L4 of a slot 11→ L5 of a slot 21→ L6 of a slot 29→ L6 of a slot 38→ L5 of a slot 30→ L4 of a slot 20→ L3 of a slot 12→ L2 of a slot 2→ L1 of a slot 48;
a branch 1 of the V-phase winding, namely a first end V1 of V1-Y1, enters from the first layer L1 of a slot 7 of the winding along a current flow direction, finally flows out from a first layer L1 of a slot 18, and the winding connection sequence is: L1 of a slot 7→ L2 of a slot 15→ L3 of a slot 25→ L4 of a slot 33→ L5 of a slot 43→ L6 of a slot 51→ L6 of a slot 6→ L5 of a slot 52→ L4 of a slot 42→ L3 of a slot 34→ L2 of a slot 24→ L1 of a slot 16→ L1 of a slot 8→ L2 of a slot 16→ L3 of a slot 26→ L4 of a slot 34→ L5 of a slot 44→ L6 of a slot 52→ L6 of a slot 7→ L5 of a slot 53→ L4 of a slot 43→ L3 of a slot 35→ L2 of a slot 25→ L1 of a slot 17→ L1 of a slot 9→ L2 of a slot 17→ L3 of a slot 27→ L4 of a slot 35→ L5 of a slot 45→ L6 of a slot 53→ L6 of a slot 8→ L5 of a slot 54→ L4 of a slot 44→ L3 of a slot 36→ L2 of a slot 26→ L1 of a slot 18;
a branch 2 of the V-phase winding, namely a first end V2 of V2-Y2, enters from the first layer L1 of a slot 25 of the winding along a current flow direction, finally flows out from a first layer L1 of a slot 36, and the winding connection sequence is: L1 of a slot 25→ L2 of a slot 33→ L3 of a slot 43→ L4 of a slot 51→ L5 of a slot 7→ L6 of a slot 15→ L6 of a slot 24→ L5 of a slot 16→ L4 of a slot 6→ L3 of a slot 52→ L2 of a slot 42→ L1 of a slot 34→ L1 of a slot 26→ L2 of a slot 34→ L3 of a slot 44→ L4 of a slot 52→ L5 of a slot 8→ L6 of a slot 16→ L6 of a slot 25→ L5 of a slot 17→ L4 of a slot 7→ L3 of a slot 53→ L2 of a slot 43→ L1 of a slot 35→ L1 of a slot 27→ L2 of a slot 35→ L3 of a slot 45→ L4 of a slot 53→ L5 of a slot 9→ L6 of a slot 17→ L6 of a slot 26→ L5 of a slot 18→ L4 of a slot 8→ L3 of a slot 54→ L2 of a slot 44→ L1 of a slot 36;
a branch 3 of the V-phase winding, namely a first end V3 of V3-Y3, enters from the first layer L1 of a slot 43 of the winding along a current flow direction, finally flows out from a first layer L1 of a slot 54, and the winding connection sequence is: L1 of a slot 43→ L2 of a slot 51→ L3 of a slot 7→ L4 of a slot 15→ L5 of a slot 25→ L6 of a slot 33→ L6 of a slot 42→ L5 of a slot 34→ L4 of a slot 24→ L3 of a slot 16→ L2 of a slot 6→ L1 of a slot 52→ L1 of a slot 44→ L2 of a slot 52→ L3 of a slot 8→ L4 of a slot 16→ L5 of a slot 26→ L6 of a slot 34→ L6 of a slot 43→ L5 of a slot 35→ L4 of a slot 25→ L3 of a slot 17→ L2 of a slot 7→ L1 of a slot 53→ L1 of a slot 45→ L2 of a slot 53→ L3 of a slot 9→ L4 of a slot 17→ L5 of a slot 27→ L6 of a slot 35→ L6 of a slot 44→ L5 of a slot 36→ L4 of a slot 26→ L3 of a slot 18→ L2 of a slot 8→ L1 of a slot 54;
a branch 1 of the W-phase winding, namely a first end W1 of W1-Z1, enters from the first layer L1 of a slot 13 of the winding along a current flow direction, finally flows out from a first layer L1 of a slot 24, and the winding connection sequence is: L1 of a slot 13→ L2 of a slot 21→ L3 of a slot 31→ L4 of a slot 39→ L5 of a slot 49→ L6 of a slot 3→ L6 of a slot 12→ L5 of a slot 4→ L4 of a slot 48→ L3 of a slot 40→ L2 of a slot 30→ L1 of a slot 22→ L1 of a slot 14→ L2 of a slot 22→ L3 of a slot 32→ L4 of a slot 40→ L5 of a slot 50→ L6 of a slot 4→ L6 of a slot 13→ L5 of a slot 5→ L4 of a slot 49→ L3 of a slot 41→ L2 of a slot 31→ L1 of a slot 23→ L1 of a slot 15→ L2 of a slot 23→ L3 of a slot 33→ L4 of a slot 41→ L5 of a slot 51→ L6 of a slot 5→ L6 of a slot 14→ L5 of a slot 6→ L4 of a slot 50→ L3 of a slot 42→ L2 of a slot 32→ L1 of a slot 24;
a branch 2 of the W-phase winding, namely a first end W2 of W2-Z2, enters from the first layer L1 of a slot 31 of the winding along a current flow direction, finally flows out from a first layer L1 of a slot 42, and the winding connection sequence is: L1 of a slot 31→ L2 of a slot 39→ L3 of a slot 49→ L4 of a slot 3→ L5 of a slot 13→ L6 of a slot 21→ L6 of a slot 30→ L5 of a slot 22→ L4 of a slot 12→ L3 of a slot 4→ L2 of a slot 48→ L1 of a slot 40→ L1 of a slot 32→ L2 of a slot 40→ L3 of a slot 50→ L4 of a slot 4→ L5 of a slot 14→ L6 of a slot 22→ L6 of a slot 31→ L5 of a slot 23→ L4 of a slot 13→ L3 of a slot 5→ L2 of a slot 49→ L1 of a slot 41→ L1 of a slot 33→ L2 of a slot 41→ L3 of a slot 51→ L4 of a slot 5→ L5 of a slot 15→ L6 of a slot 23→ L6 of a slot 32→ L5 of a slot 24→ L4 of a slot 14→ L3 of a slot 6→ L2 of a slot 50→ L1 of a slot 42;
a branch 3 of the W-phase winding, namely a first end W3 of W3-Z3, enters from the first layer L1 of a slot 49 of the winding along a current flow direction, finally flows out from a first layer L1 of a slot 6, and the winding connection sequence is: L1 of a slot 49→ L2 of a slot 3→ L3 of a slot 13→ L4 of a slot 21→ L5 of a slot 31→ L6 of a slot 39→ L6 of a slot 48→ L5 of a slot 40→ L4 of a slot 30→ L3 of a slot 22→ L2 of a slot 12→ L1 of a slot 4→ L1 of a slot 50→ L2 of a slot 4→ L3 of a slot 14→ L4 of a slot 22→ L5 of a slot 32→ L6 of a slot 40→ L6 of a slot 49→ L5 of a slot 41→ L4 of a slot 31→ L3 of a slot 23→ L2 of a slot 13→ L1 of a slot 5→ L1 of a slot 51→ L2 of a slot 5→ L3 of a slot 15→ L4 of a slot 23→ L5 of a slot 33→ L6 of a slot 41→ L6 of a slot 50→ L5 of a slot 42→ L4 of a slot 32→ L3 of a slot 24→ L2 of a slot 14→ L1 of a slot 6.

## Patentansprüche

1. Dreigleisige Ausgleichswicklung eines sechspoligen, vierundfünfzig-Nuten-Flachkupferdrahtmotors, umfassend:
eine dreiphasige Flachkupferdrahtwicklung, die symmetrisch entlang der Umfangsrichtung eines genuteten Eisenkerns verteilt ist,
wobei die dreiphasige Flachkupferdrahtwicklung Folgendes umfasst:
• einen geraden Drahtabschnitt (2), der in den Nuten des Eisenkerns verteilt ist,
• ein Lötende (1), das an einer Seite eines Endes des Eisenkerns (2) verteilt ist, und
• ein Stromleiterende (3), das an der anderen Seite des Eisenkerns (2) verteilt ist;
wobei die Spannweiten der Lötenden (1) gleich sind und die Höhen der Lötenden (1) gleich sind;
das Stromleiterende (3) besteht aus vier U-Pin-Drahttypen und einem 1-Pin-Drahttyp, und eine erste Lage des Stromleiterendes (3) besteht aus einem 1-Pin-Drahttyp (4) und einem U-Pin-Drahttyp (5) mit gleicher Spannweite; sowohl eine zweite Lage als auch eine dritte Lage bestehen aus demselben U-Pin-Drahttyp (6) mit gleicher Spannweite; sowohl eine vierte Lage als auch eine fünfte Lage bestehen aus demselben U-Pin-Drahttyp (7) mit gleicher Spannweite; eine sechste Lage besteht aus einem U-Pin-Drahttyp (8) mit gleicher Spannweite;
der 1-Pin-Drahttyp (4) umfasst einen U-Phasen-Stromleiter, einen V-Phasen-Stromleiter, einen W-Phasen-Stromleiter und einen Sternpunktleiter, wenn die Wicklung in Y-Schaltung ausgeführt wird, wobei der U-Phasen-Stromleiter, der V-Phasen-Stromleiter, der W-Phasen-Stromleiter und der Sternpunktleiter an einem Ende der Wicklung in der ersten Lage des genuteten Eisenkerns verteilt sind;
es sind keine anderen hervorstehenden Spezialdrähte oder Brückendrähte vorgesehen.

2. Dreigleisige Ausgleichswicklung des sechspoligen, vierundfünfzig-Nuten-Flachkupferdrahtmotors nach Anspruch 1,
wobei:
die dreiphasige Flachkupferdrahtwicklung eine sechslagige Wicklung ist, und jede Phasenwicklung aus drei parallel geschalteten Strangen besteht;
die Anschlussreihenfolge jedes parallelen Strangs wie folgt eingerichtet ist:
• Eintritt in die erste Lage L1 des genuteten Eisenkerns;
• Durchlaufen der zweiten Lage L2, der dritten Lage L3, der vierten Lage L4, der fünften Lage L5 und der sechsten Lage L6 in einer Vorwärtsrichtung der Reihe nach;
• Durchlaufen der sechsten Lage L6, der fünften Lage L5, der vierten Lage L4, der dritten Lage L3, der zweiten Lage L2 und der ersten Lage L1 in umgekehrter Richtung der Reihe nach;
• Durchlaufen der ersten Lage L1, der zweiten Lage L2, der dritten Lage L3, der vierten Lage L4, der fünften Lage L5 und der sechsten Lage L6 in Vorwärtsrichtung;
• Durchlaufen der sechsten Lage L6, der fünften Lage L5, der vierten Lage L4, der dritten Lage L3, der zweiten Lage L2 und der ersten Lage L1 in umgekehrter Richtung;
• Durchlaufen der ersten Lage L1, der zweiten Lage L2, der dritten Lage L3, der vierten Lage L4, der fünften Lage L5 und der sechsten Lage L6 in Vorwärtsrichtung;
• Durchlaufen der sechsten Lage L6, der fünften Lage L5, der vierten Lage L4, der dritten Lage L3 und der zweiten Lage L2 in umgekehrter Richtung;
• Schließlich Austritt aus der ersten Lage L1.

3. Dreigleisige Ausgleichswicklung des sechspoligen, vierundfünfzig-Nuten-Flachkupferdrahtmotors nach Anspruch 1 oder 2,
wobei:
der U-Phasen-Stromleiter, der V-Phasen-Stromleiter und der W-Phasen-Stromleiter der dreiphasigen Flachkupferdrahtwicklung so ausgelegt sind, dass eine Y-Schaltung oder eine Dreieckschaltung angenommen wird;
und
die dreiphasige Flachkupferdrahtwicklung so ausgelegt ist, dass sie eine kurze Wicklungsweite mit einer Spannweite Y von acht, eine volle Wicklungsweite mit einer Spannweite Y von neun oder eine lange Wicklungsweite mit einer Spannweite Y von zehn annimmt.

4. Dreigleisige Ausgleichswicklung des sechspoligen, vierundfünfzig-Nuten-Flachkupferdrahtmotors nach Anspruch 1 oder 2,
wobei:
der U-Phasen-Stromleiter, der V-Phasen-Stromleiter, der W-Phasen-Stromleiter und der Sternpunktleiter am Ende der Wicklung in der ersten Lage des genuteten Eisenkerns gleichmäßig verteilt sind, wenn die Wicklung so ausgeführt ist, dass sie eine Y-Schaltung annimmt.

5. Dreigleisige Ausgleichswicklung des sechspoligen, vierundfünfzig-Nuten-Flachkupferdrahtmotors nach Anspruch 3,
wobei:
der U-Phasen-Stromleiter, der V-Phasen-Stromleiter, der W-Phasen-Stromleiter und der Sternpunktleiter am Ende der Wicklung in der ersten Lage des genuteten Eisenkerns gleichmäßig verteilt sind, wenn die Wicklung so ausgeführt ist, dass sie eine Y-Schaltung annimmt.

6. Verfahren zur Verwendung der dreigleisigen Ausgleichswicklung des sechspoligen, vierundfünfzig-Nuten-Flachkupferdrahtmotors nach Anspruch 1 oder 2, wobei das Verfahren in folgender Reihenfolge durchgeführt wird:
Strang 1 der U-Phasen-Wicklung, nämlich ein erstes Ende U1 von U1-X1, tritt aus der ersten Lage L1 einer Nut 1 der Wicklung in Stromflussrichtung ein, und fließt schließlich aus der ersten Lage L1 einer Nut 12 aus, und die Wicklungsanschlusssequenz ist: L1 der Nut 1 → L2 der Nut 9 → L3 der Nut 19 → L4 der Nut 27 → L5 der Nut 37 → L6 der Nut 45 → L6 der Nut 54 → L5 der Nut 46 → L4 der Nut 36 → L3 der Nut 28 → L2 der Nut 18 → L1 der Nut 10 → L1 der Nut 2 → L2 der Nut 10 → L3 der Nut 20 → L4 der Nut 28 → L5 der Nut 38 → L6 der Nut 46 → L6 der Nut 1 → L5 der Nut 47 → L4 der Nut 37 → L3 der Nut 29 → L2 der Nut 19 → L1 der Nut 11 → L1 der Nut 3 → L2 der Nut 11 → L3 der Nut 21 → L4 der Nut 29 → L5 der Nut 39 → L6 der Nut 47 → L6 der Nut 2 → L5 der Nut 48 → L4 der Nut 38 → L3 der Nut 30 → L2 der Nut 20 → L1 der Nut 12;
Strang 2 der U-Phasen-Wicklung, nämlich ein erstes Ende U2 von U2-X2, tritt aus der ersten Lage L1 einer Nut 19 der Wicklung in Stromflussrichtung ein, und fließt schließlich aus der ersten Lage L1 einer Nut 30 aus, und die Wicklungsanschlusssequenz ist: L1 eines Nutes 19 →L2 eines Nutes 27 →L3 eines Nutes 37 →L4 eines Nutes 45 →L5 eines Nutes 1 →L6 eines Nutes 9 →L6 eines Nutes 18 →L5 eines Nutes 10 →L4 eines Nutes 54 →L3 eines Nutes 46 →L2 eines Nutes 36 →L1 eines Nutes 28 →L1 eines Nutes 20 →L2 eines Nutes 28→L3 eines Nutes 38 →L4 eines Nutes 46 →L5 eines Nutes 2 →L6 eines Nutes 10 →L6 eines Nutes 19 →L5 eines Nutes 11 →L4 eines Nutes 1 →L3 eines Nutes 47 →L2 eines Nutes 37 →L1 eines Nutes 29 →L1 eines Nutes 21 →L2 eines Nutes 29 →L3 eines Nutes 39 →L4 eines Nutes 47 →L5 eines Nutes 3 →L6 eines Nutes 11 →L6 eines Nutes 20 →L5 eines Nutes 12 →L4 eines Nutes 2 →L3 eines Nutes 48 →L2 eines Nutes 38 →L1 eines Nutes 30.
Strang 3 der U-Phasenwicklung, nämlich ein erstes Ende U3 von U3-X3, tritt entlang einer Stromflussrichtung aus der ersten Schicht L1 eines Nutes 37 der Wicklung ein, verläuft durch die Wicklung und tritt schließlich aus der ersten Schicht L1 eines Nutes 48 aus. Die Wicklungsanschlusssequenz lautet:L1 eines Nutes 37 →L2 eines Nutes 45 →L3 eines Nutes 1 →L4 eines Nutes 9 →L5 eines Nutes 19 →L6 eines Nutes 27 →L6 eines Nutes 36 →L5 eines Nutes 28→L4 eines Nutes 18 →L3 eines Nutes 10 →L2 eines Nutes 54 →L1 eines Nutes 46 →L1 eines Nutes 38 →L2 eines Nutes 46 →L3 eines Nutes 2 →L4 eines Nutes 10 →L5 eines Nutes 20 →L6 eines Nutes 28→L6 eines Nutes 37 →L5 eines Nutes 29 →L4 eines Nutes 19 →L3 eines Nutes 11 →L2 eines Nutes 1 →L1 eines Nutes 47 →L1 eines Nutes 39 →L2 eines Nutes 47 →L3 eines Nutes 3 →L4 eines Nutes 11→L5 eines Nutes 21 →L6 eines Nutes 29 →L6 eines Nutes 38 →L5 eines Nutes 30 →L4 eines Nutes 20 →L3 eines Nutes 12 →L2 eines Nutes 2 →L1 eines Nutes 48
Strang 1 der V-Phasenwicklung, nämlich ein erstes Ende V1 von V1-Y1, tritt entlang der Stromflussrichtung aus der ersten Schicht L1 eines Nutes 7 der Wicklung ein und tritt schließlich aus der ersten Schicht L1 eines Nutes 18 aus.
Die Wicklungsanschlusssequenz lautet: L1 eines Nutes 7 →L2 eines Nutes 15→L3 eines Nutes 25 →L4 eines Nutes 33 →L5 eines Nutes 43 →L6 eines Nutes 51 →L6 eines Nutes 6 →L5 eines Nutes 52 →L4 eines Nutes 42 →L3 eines Nutes 34 →L2 eines Nutes 24 →L1 eines Nutes 16→L1 eines Nutes 8 →L2 eines Nutes 16 →L3 eines Nutes 26 →L4 eines Nutes 34 →L5 eines Nutes 44 →L6 eines Nutes 52 →L6 eines Nutes 7→L5 eines Nutes 53 →L4 eines Nutes 43 →L3 eines Nutes 35 →L2 eines Nutes 25 →L1 eines Nutes 17 →L1 eines Nutes 9 →L2 eines Nutes 17→L3 eines Nutes 27 →L4 eines Nutes 35 →L5 eines Nutes 45 →L6eines Nutes 53 →L6 eines Nutes 8 →L5 eines Nutes 54 →L4 eines Nutes 44 →L3 eines Nutes 36 →L2 eines Nutes 26 →L1 eines Nutes 18.
Strang 2 der V-Phasenwicklung, nämlich ein erstes Ende V2 von V2-Y2, tritt entlang der Stromflussrichtung aus der ersten Schicht L1 eines Nutes 25 der Wicklung ein und tritt schließlich aus der ersten Schicht L1 eines Nutes 36 aus.
Die Wicklungsanschlusssequenz lautet:L1 eines Nutes 25 →L2 eines Nutes 33→L3 eines Nutes 43 →L4 eines Nutes 51 →L5 eines Nutes 7 →L6 eines Nutes 15 →L6 eines Nutes 24 →L5 eines Nutes 16 →L4 eines Nutes 6→ L3 eines Nutes 52 →L2 eines Nutes 42 →L1 eines Nutes 34 →L1 eines Nutes 26 →L2 eines Nutes 34 →L3 eines Nutes 44 →L4 eines Nutes 52→L5 eines Nutes 8 →L6 eines Nutes 16 →L6 eines Nutes 25 →L5 eines Nutes 17 →L4 eines Nutes 7 →L3 eines Nutes 53 →L2 eines Nutes 43→L1 eines Nutes 35 →L1 eines Nutes 27 →L2 eines Nutes 35 →L3 eines Nutes 45 →L4 eines Nutes 53 →L5 eines Nutes 9 →L6 eines Nutes 17→L6 eines Nutes 26 →L5 eines Nutes 18 →L4 eines Nutes 8 →L3 eines Nutes 54 →L2 eines Nutes 44 →L1 eines Nutes 36.
Strang 3 der V-Phasen-Wicklung, nämlich ein erstes Ende V3 von V3-Y3, tritt aus der ersten Lage L1 einer Nut 43 der Wicklung in Stromflussrichtung ein, und fließt schließlich aus der ersten Lage L1 einer Nut 54 aus, und die Wicklungsanschlusssequenz ist: L1 der Nut 43 → L2 der Nut 51 → L3 der Nut 7 → L4 der Nut 15 → L5 der Nut 25 → L6 der Nut 33 → L6 der Nut 42 → L5 der Nut 34 → L4 der Nut 24 → L3 der Nut 16 → L2 der Nut 6 → L1 der Nut 52 → L1 der Nut 44 → L2 der Nut 52 → L3 der Nut 8 → L4 der Nut 16 → L5 der Nut 26 → L6 der Nut 34 → L6 der Nut 43 → L5 der Nut 35 → L4 der Nut 25 → L3 der Nut 17 → L2 der Nut 7 → L1 der Nut 53 → L1 der Nut 45 → L2 der Nut 53 → L3 der Nut 9 → L4 der Nut 17 → L5 der Nut 27 → L6 der Nut 35 → L6 der Nut 44 → L5 der Nut 36 → L4 der Nut 26 → L3 der Nut 18 → L2 der Nut 8 → L1 der Nut 54.
Strang 1 der W-Phasen-Wicklung, nämlich ein erstes Ende W1 von W1-Z1, tritt aus der ersten Lage L1 einer Nut 13 der Wicklung in Stromflussrichtung ein, und fließt schließlich aus der ersten Lage L1 einer Nut 24 aus, und die Wicklungsanschlusssequenz ist: L1 der Nut 13 → L2 der Nut 21 → L3 der Nut 31 → L4 der Nut 39 → L5 der Nut 49 → L6 der Nut 3 → L6 der Nut 12 → L5 der Nut 4 → L4 der Nut 48 → L3 der Nut 40 → L2 der Nut 30 → L1 der Nut 22 → L1 der Nut 14 → L2 der Nut 22 → L3 der Nut 32 → L4 der Nut 40 → L5 der Nut 50 → L6 der Nut 4 → L6 der Nut 13 → L5 der Nut 5 → L4 der Nut 49 → L3 der Nut 41 → L2 der Nut 31 → L1 der Nut 23 → L1 der Nut 15 → L2 der Nut 23 → L3 der Nut 33 → L4 der Nut 41 → L5 der Nut 51 → L6 der Nut 5 → L6 der Nut 14 → L5 der Nut 6 → L4 der Nut 50 → L3 der Nut 42 → L2 der Nut 32 → L1 der Nut 24.
Strang 2 der W-Phasen-Wicklung, nämlich ein erstes Ende W2 von W2-Z2, tritt aus der ersten Lage L1 einer Nut 31 der Wicklung in Stromflussrichtung ein, und fließt schließlich aus der ersten Lage L1 einer Nut 42 aus, und die Wicklungsanschlusssequenz ist: L1 der Nut 31 → L2 der Nut 39 → L3 der Nut 49 → L4 der Nut 3 → L5 der Nut 13 → L6 der Nut 21 → L6 der Nut 30 → L5 der Nut 22 → L4 der Nut 12 → L3 der Nut 4 → L2 der Nut 48 → L1 der Nut 40 → L1 der Nut 32 → L2 der Nut 40 → L3 der Nut 50 → L4 der Nut 4 → L5 der Nut 14 → L6 der Nut 22 → L6 der Nut 31 → L5 der Nut 23 → L4 der Nut 13 → L3 der Nut 5 → L2 der Nut 49 → L1 der Nut 41 → L1 der Nut 33 → L2 der Nut 41 → L3 der Nut 51 → L4 der Nut 5 → L5 der Nut 15 → L6 der Nut 23 → L6 der Nut 32 → L5 der Nut 24 → L4 der Nut 14 → L3 der Nut 6 → L2 der Nut 50 → L1 der Nut 42.
Strang 3 der W-Phasen-Wicklung, nämlich ein erstes Ende W3 von W3-Z3, tritt aus der ersten Lage L1 einer Nut 49 der Wicklung in Stromflussrichtung ein, und fließt schließlich aus der ersten Lage L1 einer Nut 6 aus, und die Wicklungsanschlusssequenz ist: L1 der Nut 49 → L2 der Nut 3 → L3 der Nut 13 → L4 der Nut 21 → L5 der Nut 31 → L6 der Nut 39 → L6 der Nut 48 → L5 der Nut 40 → L4 der Nut 30 → L3 der Nut 22 → L2 der Nut 12 → L1 der Nut 4 → L1 der Nut 50 → L2 der Nut 4 → L3 der Nut 14 → L4 der Nut 22 → L5 der Nut 32 → L6 der Nut 40 → L6 der Nut 49 → L5 der Nut 41 → L4 der Nut 31 → L3 der Nut 23 → L2 der Nut 13 → L1 der Nut 5 → L1 der Nut 51 → L2 der Nut 5 → L3 der Nut 15 → L4 der Nut 23 → L5 der Nut 33 → L6 der Nut 41 → L6 der Nut 50 → L5 der Nut 42 → L4 der Nut 32 → L3 der Nut 24 → L2 der Nut 14 → L1 der Nut 6.

7. Verfahren zur Verwendung der dreigleisigen, ausgeglichenen Wicklung des Sechspol-54-Nuten-Flachkupferdrahtmotors nach Anspruch 3, wobei das Verfahren in folgender Reihenfolge durchgeführt wird:
Strang 1 der U-Phasen-Wicklung, nämlich ein erstes Ende U1 von U1-X1, tritt aus der ersten Lage L1 einer Nut 1 der Wicklung in Stromflussrichtung ein und fließt schließlich aus der ersten Lage L1 einer Nut 12 aus. Die Wicklungsanschlusssequenz lautet: L1 der Nut 1 → L2 der Nut 9 → L3 der Nut 19 → L4 der Nut 27 → L5 der Nut 37 → L6 der Nut 45 → L6 der Nut 54 → L5 der Nut 46 → L4 der Nut 36 → L3 der Nut 28 → L2 der Nut 18 → L1 der Nut 10 → L1 der Nut 2 → L2 der Nut 10 → L3 der Nut 20 → L4 der Nut 28 → L5 der Nut 38 → L6 der Nut 46 → L6 der Nut 1 → L5 der Nut 47 → L4 der Nut 37 → L3 der Nut 29 → L2 der Nut 19 → L1 der Nut 11 → L1 der Nut 3 → L2 der Nut 11 → L3 der Nut 21 → L4 der Nut 29 → L5 der Nut 39 → L6 der Nut 47 → L6 der Nut 2 → L5 der Nut 48 → L4 der Nut 38 → L3 der Nut 30 → L2 der Nut 20 → L1 der Nut 12.
Strang 2 der U-Phasen-Wicklung, nämlich ein erstes Ende U2 von U2-X2, tritt aus der ersten Lage L1 einer Nut 19 der Wicklung in Stromflussrichtung ein und fließt schließlich aus der ersten Lage L1 einer Nut 30 aus. Die Wicklungsanschlusssequenz lautet: L1 der Nut 19 → L2 der Nut 27 → L3 der Nut 37 → L4 der Nut 45 → L5 der Nut 1 → L6 der Nut 9 → L6 der Nut 18 → L5 der Nut 10 → L4 der Nut 54 → L3 der Nut 46→ L2 der Nut 36 → L1 der Nut 28 → L1 der Nut 20 → L2 der Nut 28 → L3 der Nut 38 → L4 der Nut 46 → L5 der Nut 2 → L6 der Nut 10 → L6 der Nut 19 → L5 der Nut 11 → L4 der Nut 1 → L3 der Nut 47 → L2 der Nut 37 → L1 der Nut 29 → L1 der Nut 21 → L2 der Nut 29 → L3 der Nut 39 → L4 der Nut 47 → L5 der Nut 3 → L6 der Nut 11 → L6 der Nut 20 → L5 der Nut 12 → L4 der Nut 2 → L3 der Nut 48 → L2 der Nut 38 → L1 der Nut 30.
Strang 3 der U-Phasen-Wicklung, nämlich ein erstes Ende U3 von U3-X3, tritt aus der ersten Lage L1 einer Nut 37 der Wicklung in Stromflussrichtung ein und fließt schließlich aus der ersten Lage L1 einer Nut 48 aus. Die Wicklungsanschlusssequenz lautet: L1 der Nut 37 → L2 der Nut 45 → L3 der Nut 1 → L4 der Nut 9 → L5 der Nut 19 → L6 der Nut 27 → L6 der Nut 36 → L5 der Nut 28 → L4 der Nut 18 → L3 der Nut 10 → L2 der Nut 54 → L1 der Nut 46 → L1 der Nut 38 → L2 der Nut 46 → L3 der Nut 2 → L4 der Nut 10 → L5 der Nut 20 → L6 der Nut 28 → L6 der Nut 37 → L5 der Nut 29 → L4 der Nut 19 → L3 der Nut 11 → L2 der Nut 1 → L1 der Nut 47 → L1 der Nut 39 → L2 der Nut 47 → L3 der Nut 3 → L4 der Nut 11 → L5 der Nut 21 → L6 der Nut 29 → L6 der Nut 38 → L5 der Nut 30 → L4 der Nut 20 → L3 der Nut 12 → L2 der Nut 2 → L1 der Nut 48.
Strang 1 der V-Phasen-Wicklung, nämlich ein erstes Ende V1 von V1-Y1, tritt aus der ersten Lage L1 einer Nut 7 der Wicklung in Stromflussrichtung ein und fließt schließlich aus der ersten Lage L1 einer Nut 18 aus. Die Wicklungsanschlusssequenz lautet: L1 der Nut 7 → L2 der Nut 15 → L3 der Nut 25 → L4 der Nut 33 → L5 der Nut 43 → L6 der Nut 51 → L6 der Nut 6 → L5 der Nut 52 → L4 der Nut 42 → L3 der Nut 34 → L2 der Nut 24 → L1 der Nut 16 → L1 der Nut 8 → L2 der Nut 16 → L3 der Nut 26 → L4 der Nut 34 → L5 der Nut 44 → L6 der Nut 52 → L6 der Nut 7 → L5 der Nut 53 → L4 der Nut 43 → L3 der Nut 35 → L2 der Nut 25 → L1 der Nut 17 → L1 der Nut 9 → L2 der Nut 17 → L3 der Nut 27 → L4 der Nut 35 → L5 der Nut 45 → L6 der Nut 53 → L6 der Nut 8 → L5 der Nut 54 → L4 der Nut 44 → L3 der Nut 36 → L2 der Nut 26 → L1 der Nut 18.
Strang 2 der V-Phasen-Wicklung, nämlich das erste Ende V2 von V2-Y2, tritt aus der ersten Lage L1 einer Nut 25 der Wicklung in Stromflussrichtung ein und fließt schließlich aus der ersten Lage L1 einer Nut 36 aus. Die Wicklungsanschlusssequenz lautet: L1 der Nut 25 → L2 der Nut 33 → L3 der Nut 43 → L4 der Nut 51 → L5 der Nut 7 → L6 der Nut 15 → L6 der Nut 24 → L5 der Nut 16 → L4 der Nut 6 → L3 der Nut 52 → L2 der Nut 42 → L1 der Nut 34 → L1 der Nut 26 → L2 der Nut 34 → L3 der Nut 44 → L4 der Nut 52 → L5 der Nut 8 → L6 der Nut 16 → L6 der Nut 25 → L5 der Nut 17 → L4 der Nut 7 → L3 der Nut 53 → L2 der Nut 43 → L1 der Nut 35 → L1 der Nut 27 → L2 der Nut 35 → L3 der Nut 45 → L4 der Nut 53 → L5 der Nut 9 → L6 der Nut 17 → L6 der Nut 26 → L5 der Nut 18 → L4 der Nut 8 → L3 der Nut 54 → L2 der Nut 44 → L1 der Nut 36.
Strang 3 der V-Phasen-Wicklung, nämlich das erste Ende V3 von V3-Y3, tritt aus der ersten Lage L1 einer Nut 43 der Wicklung in Stromflussrichtung ein und fließt schließlich aus der ersten Lage L1 einer Nut 54 aus. Die Wicklungsanschlusssequenz lautet: L1 der Nut 43 → L2 der Nut 51 → L3 der Nut 7 → L4 der Nut 15 → L5 der Nut 25 → L6 der Nut 33 → L6 der Nut 42 → L5 der Nut 34 → L4 der Nut 24 → L3 der Nut 16 → L2 der Nut 6 → L1 der Nut 52 → L1 der Nut 44 → L2 der Nut 52 → L3 der Nut 8 → L4 der Nut 16 → L5 der Nut 26 → L6 der Nut 34 → L6 der Nut 43 → L5 der Nut 35 → L4 der Nut 25 → L3 der Nut 17 → L2 der Nut 7 → L1 der Nut 53 → L1 der Nut 45 → L2 der Nut 53 → L3 der Nut 9 → L4 der Nut 17 → L5 der Nut 27 → L6 der Nut 35 → L6 der Nut 44 → L5 der Nut 36 → L4 der Nut 26 → L3 der Nut 18 → L2 der Nut 8 → L1 der Nut 54.
Strang 1 der W-Phasen-Wicklung, nämlich das erste Ende W1 von W1-Z1, tritt aus der ersten Lage L1 einer Nut 13 der Wicklung in Stromflussrichtung ein und fließt schließlich aus der ersten Lage L1 einer Nut 24 aus. Die Wicklungsanschlusssequenz lautet: L1 der Nut 13 → L2 der Nut 21 → L3 der Nut 31 → L4 der Nut 39 → L5 der Nut 49 → L6 der Nut 3 → L6 der Nut 12 → L5 der Nut 4→ L4 der Nut 48 → L3 der Nut 40 → L2 der Nut 30 → L1 der Nut 22 → L1 der Nut 14→ L2 der Nut 22 → L3 der Nut 32 → L4 der Nut 40 → L5 der Nut 50 → L6 der Nut 4→ L6 der Nut 13 → L5 der Nut 5 → L4 der Nut 49 → L3 der Nut 41 → L2 der Nut 31 → L1 der Nut 23 → L1 der Nut 15 → L2 der Nut 23 → L3 der Nut 33 → L4 der Nut 41 → L5 der Nut 51 → L6 der Nut 5 → L6 der Nut 14 → L5 der Nut 6 → L4 der Nut 50 → L3 der Nut 42 → L2 der Nut 32 → L1 der Nut 24.
Strang 2 der W-Phasen-Wicklung, nämlich das erste Ende W2 von W2-Z2, tritt aus der ersten Lage L1 einer Nut 31 der Wicklung in Stromflussrichtung ein und fließt schließlich aus der ersten Lage L1 einer Nut 42 aus. Die Wicklungsanschlusssequenz lautet: L1 der Nut 31 → L2 der Nut 39 → L3 der Nut 49 → L4 der Nut 3 → L5 der Nut 13 → L6 der Nut 21 → L6 der Nut 30 → L5 der Nut 22 → L4 der Nut 12 → L3 der Nut 4 → L2 der Nut 48 → L1 der Nut 40 → L1 der Nut 32 → L2 der Nut 40 → L3 der Nut 50 → L4 der Nut 4 → L5 der Nut 14 → L6 der Nut 22 → L6 der Nut 31 → L5 der Nut 23 → L4 der Nut 13 → L3 der Nut 5 → L2 der Nut 49 → L1 der Nut 41 → L1 der Nut 33 → L2 der Nut 41 → L3 der Nut 51 → L4 der Nut 5 → L5 der Nut 15 → L6 der Nut 23 → L6 der Nut 32 → L5 der Nut 24 → L4 der Nut 14 → L3 der Nut 6 → L2 der Nut 50 → L1 der Nut 42.
Strang 3 der W-Phasen-Wicklung, nämlich das erste Ende W3 von W3-Z3, tritt aus der ersten Lage L1 einer Nut 49 der Wicklung in Stromflussrichtung ein und fließt schließlich aus der ersten Lage L1 einer Nut 6 aus. Die Wicklungsanschlusssequenz lautet: L1 der Nut 49 → L2 der Nut 3 → L3 der Nut 13 → L4 der Nut 21 → L5 der Nut 31 → L6 der Nut 39 → L6 der Nut 48 → L5 der Nut 40 → L4 der Nut 30 → L3 der Nut 22 → L2 der Nut 12 → L1 der Nut 4 → L1 der Nut 50 → L2 der Nut 4 → L3 der Nut 14 → L4 der Nut 22 → L5 der Nut 32 → L6 der Nut 40 → L6 der Nut 49 → L5 der Nut 41 → L4 der Nut 31 → L3 der Nut 23 → L2 der Nut 13 → L1 der Nut 5 → L1 der Nut 51 → L2 der Nut 5 → L3 der Nut 15 → L4 der Nut 23 → L5 der Nut 33 → L6 der Nut 41 → L6 der Nut 50 → L5 der Nut 42 → L4 der Nut 32 → L3 der Nut 24 → L2 der Nut 14 → L1 der Nut 6.

8. Strang 1 der U-Phasen-Wicklung, nämlich das erste Ende U1 von U1-X1, tritt aus der ersten Lage L1 einer Nut 1 der Wicklung in Stromflussrichtung ein und fließt schließlich aus der ersten Lage L1 einer Nut 12 aus.
Die Wicklungsanschlusssequenz lautet: L1 der Nut 1 → L2 der Nut 9 → L3 der Nut 19→ L4 der Nut 27 → L5 der Nut 37 → L6 der Nut 45 → L6 der Nut 54 → L5 der Nut 46 → L4 der Nut 36 → L3 der Nut 28 → L2 der Nut 18 → L1 der Nut 10 → L1 der Nut 2 → L2 der Nut 10 → L3 der Nut 20 → L4 der Nut 28 → L5 der Nut 38 → L6 der Nut 46 → L6 der Nut 1 → L5 der Nut 47 → L4 der Nut 37 → L3 der Nut 29 → L2 der Nut 19 → L1 der Nut 11 → L1 der Nut 3 → L2 der Nut 11 → L3 der Nut 21 → L4 der Nut 29 → L5 der Nut 39 → L6 der Nut 47 → L6 der Nut 2 → L5 der Nut 48 → L4 der Nut 38 → L3 der Nut 30 → L2 der Nut 20 → L1 der Nut 12.
Strang 2 der U-Phasen-Wicklung, nämlich das erste Ende U2 von U2-X2, tritt aus der ersten Lage L1 einer Nut 19 der Wicklung in Stromflussrichtung ein und fließt schließlich aus der ersten Lage L1 einer Nut 30 aus.
Die Wicklungsanschlusssequenz lautet: L1 der Nut 19 → L2 der Nut 27 → L3 der Nut 37 → L4 der Nut 45 → L5 der Nut 1 → L6 der Nut 9 → L6 der Nut 18 → L5 der Nut 10--> L4 der Nut 54 → L3 der Nut 46 → L2 der Nut 36 → L1 der Nut 28 → L1 der Nut 20 → L2 der Nut 28 → L3 der Nut 38 → L4 der Nut 46 → L5 der Nut 2 → L6 der Nut 10 → L6 der Nut 19 → L5 der Nut 11 → L4 der Nut 1 → L3 der Nut 47 → L2 der Nut 37 → L1 der Nut 29 → L1 der Nut 21 → L2 der Nut 29 → L3 der Nut 39 → L4 der Nut 47 → L5 der Nut 3 → L6 der Nut 11 → L6 der Nut 20 → L5 der Nut 12 → L4 der Nut 2 → L3 der Nut 48 → L2 der Nut 38 → L1 der Nut 30.
Strang 3 der U-Phasen-Wicklung, nämlich das erste Ende U3 von U3-X3, tritt aus der ersten Lage L1 einer Nut 37 der Wicklung in Stromflussrichtung ein und fließt schließlich aus der ersten Lage L1 einer Nut 48 aus.
Die Wicklungsanschlusssequenz lautet: L1 der Nut 37 → L2 der Nut 45 → L3 der Nut 1 → L4 der Nut 9 → L5 der Nut 19 → L6 der Nut 27 → L6 der Nut 36 → L5 der Nut 28→ L4 der Nut 18 → L3 der Nut 10 → L2 der Nut 54 → L1 der Nut 46 → L1 der Nut 38 → L2 der Nut 46 → L3 der Nut 2 → L4 der Nut 10 → L5 der Nut 20 → L6 der Nut 28 → L6 der Nut 37 → L5 der Nut 29 → L4 der Nut 19 → L3 der Nut 11 → L2 der Nut 1 → L1 der Nut 47 → L1 der Nut 39 → L2 der Nut 47 → L3 der Nut 3 → L4 der Nut 11→ L5 der Nut 21 → L6 der Nut 29 → L6 der Nut 38 → L5 der Nut 30 → L4 der Nut 20 → L3 der Nut 12 → L2 der Nut 2 → L1 der Nut 48.
Strang 1 der V-Phasen-Wicklung, nämlich das erste Ende V1 von V1-Y1, tritt aus der ersten Lage L1 der Nut 7 der Wicklung in Stromflussrichtung ein und fließt schließlich aus der ersten Lage L1 der Nut 18 aus.
Die Wicklungsanschlusssequenz lautet: L1 der Nut 7 → L2 der Nut 15 → L3 der Nut 25 → L4 der Nut 33 → L5 der Nut 43 → L6 der Nut 51 → L6 der Nut 6 → L5 der Nut 52 → L4 der Nut 42 → L3 der Nut 34 → L2 der Nut 24 → L1 der Nut 16 → L1 der Nut 8 → L2 der Nut 16 → L3 der Nut 26 → L4 der Nut 34 → L5 der Nut 44 → L6 der Nut 52 → L6 der Nut 7 → L5 der Nut 53 → L4 der Nut 43 → L3 der Nut 35 → L2 der Nut 25 → L1 der Nut 17 → L1 der Nut 9 → L2 der Nut 17 → L3 der Nut 27 → L4 der Nut 35 → L5 der Nut 45 → L6 der Nut 53 → L6 der Nut 8 → L5 der Nut 54 → L4 der Nut 44 → L3 der Nut 36 → L2 der Nut 26 → L1 der Nut 18.
Strang 2 der V-Phasen-Wicklung, nämlich das erste Ende V2 von V2-Y2, tritt aus der ersten Lage L1 der Nut 25 der Wicklung in Stromflussrichtung ein und fließt schließlich aus der ersten Lage L1 der Nut 36 aus.
Die Wicklungsanschlusssequenz lautet: L1 der Nut 25 → L2 der Nut 33 → L3 der Nut 43 → L4 der Nut 51 → L5 der Nut 7 → L6 der Nut 15 → L6 der Nut 24 → L5 der Nut 16 → L4 der Nut 6 → L3 der Nut 52 → L2 der Nut 42 → L1 der Nut 34 → L1 der Nut 26 → L2 der Nut 34 → L3 der Nut 44 → L4 der Nut 52 → L5 der Nut 8 → L6 der Nut 16 → L6 der Nut 25 → L5 der Nut 17 → L4 der Nut 7 → L3 der Nut 53 → L2 der Nut 43 → L1 der Nut 35 → L1 der Nut 27 → L2 der Nut 35 → L3 der Nut 45 → L4 der Nut 53 → L5 der Nut 9 → L6 der Nut 17 → L6 der Nut 26 → L5 der Nut 18 → L4 der Nut 8 → L3 der Nut 54 → L2 der Nut 44 → L1 der Nut 36.
Strang 3 der V-Phasenwicklung, nämlich ein erstes Ende V3 von V3-Y3, tritt entlang einer Stromflussrichtung aus der ersten Schicht L1 eines Nutes 43 der Wicklung ein, verläuft durch die Wicklung und tritt schließlich aus der ersten Schicht L1 eines Nutes 54 aus.
Die Wicklungsanschlusssequenz lautet: L1 eines Nutes 43 →L2 eines Nutes 51 →L3 eines Nutes 7 →L4 eines Nutes 15 →L5 eines Nutes 25 →L6 eines Nutes 33 →L6 eines Nutes 42 →L5 eines Nutes 34 →L4 eines Nutes 24 →L3 eines Nutes 16 →L2 eines Nutes 6 →L1 eines Nutes 52 L1 eines Nutes 44 →L2 eines Nutes 52 →L3 eines Nutes 8 →L4 eines Nutes 16 →L5 eines Nutes 26 →L6 eines Nutes 34 →L6 eines Nutes 43 →L5 eines Nutes 35 →L4 eines Nutes 25 →L3 eines Nutes 17 →L2 eines Nutes 7→L1 eines Nutes 53 →L1 eines Nutes 45 →L2 eines Nutes 53 →L3 eines Nutes 9 →L4 eines Nutes 17 →L5 eines Nutes 27 →L6 eines Nutes 35 →L6 eines Nutes 44 →L5 eines Nutes 36 →L4 eines Nutes 26 →L3 eines Nutes 18 →L2 eines Nutes 8 →L1 eines Nutes 54.
Ein Strang 1 der W-Phasenwicklung, nämlich ein erstes Ende W1 von W1-Z1, tritt entlang einer Stromflussrichtung aus der ersten Schicht L1 eines Nutes 13 der Wicklung ein, verläuft durch die Wicklung und tritt schließlich aus der ersten Schicht L1 eines Nutes 24 aus.
Die Wicklungsanschlusssequenz lautet:L1 eines Nutes 13 →L2 eines Nutes 21 →L3 eines Nutes 31 →L4 eines Nutes 39 →L5 eines Nutes 49 →L6 eines Nutes 3 →L6 eines Nutes 12 →L5 eines Nutes 4 →L4 eines Nutes 48 →L3 eines Nutes 40 L2 eines Nutes 30 →L1 eines Nutes 22 →L1 eines Nutes 14 →L2 eines Nutes22 →L3 eines Nutes 32 →L4 eines Nutes 40 →L5 eines Nutes 50 →L6 eines Nutes 4 →L6 eines Nutes 13 →L5 eines Nutes 5 →L4 eines Nutes 49 →L3 eines Nutes 41 →L2 eines Nutes 31 →L1 eines Nutes 23 →L1 eines Nutes 15 →L2 eines Nutes 23 →L3 eines Nutes 33 →L4 eines Nutes 41 →L5 eines Nutes 51 →L6 eines Nutes 5 →L6 eines Nutes 14 →L5 eines Nutes 6 →L4 eines Nutes 50 →L3 eines Nutes 42 →L2 eines Nutes 32 →L1 eines Nutes 24.
Ein Strang 2 der W-Phasenwicklung, nämlich ein erstes Ende W2 von W2-Z2, tritt entlang einer Stromflussrichtung aus der ersten Schicht L1 eines Nutes 31 der Wicklung ein, verläuft durch die Wicklung und tritt schließlich aus der ersten Schicht L1 eines Nutes 42 aus.
Die Wicklungsanschlusssequenz lautet: L1 eines Nutes 31 → L2 eines Nutes 39 →L3 eines Nutes 49 →L4 eines Nutes 3 →L5 eines Nutes 13 →L6 eines Nutes 21 →L6 eines Nutes 30 →L5 eines Nutes 22 →L4 eines Nutes 12 →L3 eines Nutes 4 →L2 eines Nutes 48 →L1 eines Nutes 40 →L1 eines Nutes 32 →L2 eines Nutes 40 →L3 eines Nutes 50 →L4 eines Nutes 4 →L5 eines Nutes 14 →L6 eines Nutes 22 →L6 eines Nutes 31 →L5 eines Nutes 23 →L4 eines Nutes 13 →L3 eines Nutes 5 →L2 eines Nutes 49 →L1 eines Nutes 41 →L1 eines Nutes 33 →L2 eines Nutes 41 →L3 eines Nutes 51 →L4 eines Nutes 5 →L5 eines Nutes 15 →L6 eines Nutes 23 →L6 eines Nutes 32 →L5 eines Nutes 24 →L4 eines Nutes 14 →L3 eines Nutes 6 →L2 eines Nutes 50 →L1 eines Nutes 42.
Ein Strang 3 der W-Phasenwicklung, nämlich ein erstes Ende W3 von W3-Z3, tritt entlang einer Stromflussrichtung aus der ersten Schicht L1 eines Nutes 49 der Wicklung ein, verläuft durch die Wicklung und tritt schließlich aus der ersten Schicht L1 eines Nutes 6 aus.
Die Wicklungsanschlusssequenz lautet: L1 eines Nutes 49 →L2 eines Nutes 3 →L3 eines Nutes 13 →L4 eines Nutes 21 →L5 eines Nutes31→L6 eines Nutes 39 →L6 eines Nutes 48 →L5 eines Nutes 40 →L4 eines Nutes 30 →L3 eines Nutes 22 →L2 eines Nutes 12 →L1 eines Nutes 4 →L1 eines Nutes 50 →L2 eines Nutes 4 →L3 eines Nutes 14 →L4 eines Nutes 22 →L5 eines Nutes 32 →L6 eines Nutes 40 →L6 eines Nutes 49 →L5 eines Nutes 41 →L4 eines Nutes 31 →L3 eines Nutes 23 →L2 eines Nutes 13 →L1 eines Nutes 5 →L1 eines Nutes 51 →L2 eines Nutes 5 →L3 eines Nutes 15 →L4 eines Nutes 23 →L5 eines Nutes 33 →L6 eines Nutes 41 →L6 eines Nutes 50 →L5 eines Nutes 42 →L4 eines Nutes 32 →L3 eines Nutes 24 →L2 eines Nutes 14 →L1 eines Nutes 6.

9. Verfahren zur Verwendung der dreisträngigen symmetrischen Wicklung des sechspoligen Motors mit vierundfünfzig Nuten und Flachkupferleitern nach Anspruch 5, wobei das Verfahren der Reihe nach wie folgt durchgeführt wird:
Ein Strang 1 der U-Phasenwicklung, nämlich ein erstes Ende U1 von U1-X1, tritt entlang einer Stromflussrichtung aus der ersten Schicht L1 eines Nutes 1 der Wicklung ein, verläuft durch die Wicklung und tritt schließlich aus der ersten Schicht L1 eines Nutes 12 aus.
Die Wicklungsanschlusssequenz lautet: L1 eines Nutes 1 →L2 eines Nutes 9 →L3 eines Nutes 19 →L4 eines Nutes 27 →L5 eines Nutes 37 →L6 eines Nutes 45 →L6 eines Nutes 54 →L5 eines Nutes 46 →L4 eines Nutes 36 →L3 eines Nutes 28 →L2 eines Nutes 18 →L1 eines Nutes 10 →L1 eines Nutes 2 →L2 eines Nutes 10 →L3 eines Nutes 20 →L4 eines Nutes 28→L5 eines Nutes 38 →L6 eines Nutes 46 →L6 eines Nutes 1 →L5 eines Nutes 47 →L4 eines Nutes 37 →L3 eines Nutes 29 →L2 eines Nutes 19 →L1 eines Nutes 11 →L1 eines Nutes 3 →L2 eines Nutes 11 →L3 eines Nutes 21 →L4 eines Nutes 29 →L5 eines Nutes 39 →L6 eines Nutes 47 →L6 eines Nutes 2 →L5 eines Nutes 48 →L4 eines Nutes 38 →L3 eines Nutes 30 →L2 eines Nutes 20 →L1 eines Nutes 12.
Ein Strang 2 der U-Phasenwicklung, nämlich ein erstes Ende U2 von U2-X2, tritt entlang einer Stromflussrichtung aus der ersten Schicht L1 eines Nutes 19 der Wicklung ein, verläuft durch die Wicklung und tritt schließlich aus der ersten Schicht L1 eines Nutes 30 aus.
Die Wicklungsanschlusssequenz lautet: L1 eines Nutes 19 →L2 eines Nutes 27 →L3 eines Nutes 37 →L4 eines Nutes 45 →L5 eines Nutes 1 →L6 eines Nutes 9 →L6 eines Nutes 18 →L5 eines Nutes 10 →L4 eines Nutes 54 →L3 eines Nutes 46 →L2 eines Nutes 36 →L1 eines Nutes 28 →L1 eines Nutes 20 →L2 eines Nutes 28 →L3 eines Nutes 38 →L4 eines Nutes 46 →L5 eines Nutes 2 →L6 eines Nutes 10 →L6 eines Nutes 19 →L5 eines Nutes 11 →L4 eines Nutes 1 →L3 eines Nutes 47 →L2 eines Nutes 37 →L1 eines Nutes 29 →L1 eines Nutes 21 →L2 eines Nutes 29 →L3 eines Nutes 39 →L4 eines Nutes 47 →L5 eines Nutes 3 →L6 eines Nutes 11 →L6 eines Nutes 20 →L5 eines Nutes 12 →L4 eines Nutes 2 →L3 eines Nutes 48 →L2 eines Nutes 38 →L1 eines Nutes 30.
Ein Strang 3 der U-Phasenwicklung, nämlich ein erstes Ende U3 von U3-X3, tritt entlang einer Stromflussrichtung aus der ersten Schicht L1 eines Nutes 37 der Wicklung ein, verläuft durch die Wicklung und tritt schließlich aus der ersten Schicht L1 eines Nutes 48 aus.
Die Wicklungsanschlusssequenz lautet: L1 eines Nutes 37 →L2 eines Nutes 45 →L3 eines Nutes 1 →L4 eines Nutes 9 →L5 eines Nutes 19 →L6 eines Nutes 27 →L6 eines Nutes 36 →L5 eines Nutes 28 →L4 eines Nutes 18 →L3 eines Nutes 10 →L2 eines Nutes 54 →L1 eines Nutes 46 →L1 eines Nutes 38 →L2 eines Nutes 46 →L3 eines Nutes 2 →L4 eines Nutes 10 →L5 eines Nutes 20 →L6 eines Nutes 28 →L6 eines Nutes 37 →L5 eines Nutes 29 →L4 eines Nutes 19 →L3 eines Nutes 11 →L2 eines Nutes 1 →L1 eines Nutes 47 →L1 eines Nutes 39 →L2 eines Nutes 47 →L3 eines Nutes 3 →L4 eines Nutes 11 →L5 eines Nutes 21 →L6 eines Nutes 29 →L6 eines Nutes 38 →L5 eines Nutes 30 →L4 eines Nutes 20 →L3 eines Nutes 12 →L2 eines Nutes 2 →L1 eines Nutes 48.
Ein Strang 1 der V-Phasenwicklung, nämlich ein erstes Ende V1 von V1-Y1, tritt entlang einer Stromflussrichtung aus der ersten Schicht L1 eines Nutes 7 der Wicklung ein, verläuft durch die Wicklung und tritt schließlich aus der ersten Schicht L1 eines Nutes 18 aus.
Die Wicklungsanschlusssequenz lautet: L1 eines Nutes 7 →L2 eines Nutes 15 →L3 eines Nutes 25 →L4 eines Nutes 33 →L5 eines Nutes 43 →L6 eines Nutes 51 →L6 eines Nutes 6 →L5 eines Nutes 52 →L4 eines Nutes 42 →L3 eines Nutes 34 →L2 eines Nutes 24 →L1 eines Nutes 16 →L1 eines Nutes 8 →L2 eines Nutes 16 →L3 eines Nutes 26 →L4 eines Nutes 34 →L5 eines Nutes 44 →L6 eines Nutes 52 →L6 eines Nutes 7 →L5 eines Nutes 53 →L4 eines Nutes 43 →L3 eines Nutes 35 →L2 eines Nutes 25 →L1 eines Nutes 17 →L1 eines Nutes 9 →L2 eines Nutes 17 →L3 eines Nutes 27 →L4 eines Nutes 35 →L5 eines Nutes 45 →L6 eines Nutes 53 →L6 eines Nutes 8 →L5 eines Nutes 54 →L4 eines Nutes 44 →L3 eines Nutes 36 →L2 eines Nutes 26 →L1 eines Nutes 18.
Ein Strang 2 der V-Phasenwicklung, nämlich ein erstes Ende V2 von V2-Y2, tritt entlang der Stromflussrichtung aus der ersten Lage L1 eines Nutes 25 der Wicklung ein und tritt schließlich aus der ersten Lage L1 eines Nutes 36 aus. Die Wicklungsverbindungsreihenfolge lautet:
L1 von Nut 25 → L2 von Nut 33 → L3 von Nut 43 → L4 von Nut 51 → L5 von Nut 7 → L6 von Nut 15 → L6 von Nut 24 → L5 von Nut 16 → L4 von Nut 6 → L3 von Nut 52 → L2 von Nut 42 → L1 von Nut 34 → L1 von Nut 26 → L2 von Nut 34 → L3 von Nut 44 → L4 von Nut 52 → L5 von Nut 8 → L6 von Nut 16 → L6 von Nut 25 → L5 von Nut 17 → L4 von Nut 7 → L3 von Nut 53 → L2 von Nut 43 → L1 von Nut 35 → L1 von Nut 27 → L2 von Nut 35 → L3 von Nut 45 → L4 von Nut 53 → L5 von Nut 9 → L6 von Nut 17 → L6 von Nut 26 → L5 von Nut 18 → L4 von Nut 8 → L3 von Nut 54 → L2 von Nut 44 → L1 von Nut 36.
Ein Strang 3 der V-Phasenwicklung, nämlich ein erstes Ende V3 von V3-Y3, tritt entlang einer Stromflussrichtung aus der ersten Schicht L1 eines Nutes 43 der Wicklung ein, verläuft durch die Wicklung und tritt schließlich aus der ersten Schicht L1 eines Nutes 54 aus.
Die Wicklungsanschlusssequenz lautet: L1 eines Nutes 43 →L2 eines Nutes 51 →L3 eines Nutes 7 →L4 eines Nutes 15 →L5 eines Nutes 25 →L6 eines Nutes 33 →L6 eines Nutes 42 →L5 eines Nutes 34 →L4 eines Nutes 24 →L3 eines Nutes 16 →L2 eines Nutes 6 →L1 eines Nutes 52 → L1 eines Nutes 44 →L2 eines Nutes 52 →L3 eines Nutes 8 →L4 eines Nutes 16 →L5 eines Nutes 26 → L6 eines Nutes 34 →L6 eines Nutes 43 →L5 eines Nutes 35 →L4 eines Nutes 25 →L3 eines Nutes 17 →L2 eines Nutes 7 →L1 eines Nutes 53 →L1 eines Nutes 45 →L2 eines Nutes 53 →L3 eines Nutes 9 →L4 eines Nutes 17 →L5 eines Nutes 27 →L6 eines Nutes 35 →L6 eines Nutes 44 →L5 eines Nutes 36 →L4 eines Nutes 26 →L3 eines Nutes 18 →L2 eines Nutes 8 →L1 eines Nutes 54.
Ein Strang 1 der W-Phasenwicklung, nämlich ein erstes Ende W1 von W1-Z1, tritt entlang einer Stromflussrichtung aus der ersten Schicht L1 eines Nutes 13 der Wicklung ein, verläuft durch die Wicklung und tritt schließlich aus der ersten Schicht L1 eines Nutes 24 aus.
Die Wicklungsanschlusssequenz lautet: L1 eines Nutes 13 →L2 eines Nutes 21 →L3 eines Nutes 31 →L4 eines Nutes 39 →L5 eines Nutes 49 →L6 eines Nutes 3 →L6 eines Nutes 12 →L5 eines Nutes 4 →L4 eines Nutes 48 →L3 eines Nutes 40 →L2 eines Nutes 30 →L1 eines Nutes 22 →L1 eines Nutes 14 →L2 eines Nutes 22 →L3 eines Nutes 32 →L4 eines Nutes 40 →L5 eines Nutes 50 →L6 eines Nutes 4 →L6 eines Nutes 13 →L5 eines Nutes 5 →L4 eines Nutes 49 →L3 eines Nutes 41 →L2 eines Nutes 31 →L1 eines Nutes 23 →L1 eines Nutes 15 →L2 eines Nutes 23 →L3 eines Nutes 33 →L4 eines Nutes 41 →L5 eines Nutes 51 →L6 eines Nutes 5 →L6 eines Nutes 14 →L5 eines Nutes 6 →L4 eines Nutes 50 →L3 eines Nutes 42 →L2 eines Nutes 32 →L1 eines Nutes 24.
Ein Strang 2 der W-Phasenwicklung, nämlich ein erstes Ende W2 von W2-Z2, tritt entlang einer Stromflussrichtung aus der ersten Schicht L1 eines Nutes 31 der Wicklung ein, verläuft durch die Wicklung und tritt schließlich aus der ersten Schicht L1 eines Nutes 42 aus.
Die Wicklungsanschlusssequenz lautet: L1 eines Nutes 31 →L2 eines Nutes 39 →L3 eines Nutes 49 →L4 eines Nutes 3 →L5 eines Nutes 13 →L6 eines Nutes 21 →L6 eines Nutes 30 →L5 eines Nutes 22 →L4 eines Nutes 12 →L3 eines Nutes 4 →L2 eines Nutes 48 →L1 eines Nutes 40 →L1 eines Nutes 32 →L2 eines Nutes 40 →L3 eines Nutes 50 →L4 eines Nutes 4 →L5 eines Nutes 14 →L6 eines Nutes 22 →L6 eines Nutes 31 →L5 eines Nutes 23 →L4 eines Nutes 13 →L3 eines Nutes 5 →L2 eines Nutes 49 →L1 eines Nutes 41 →L1 eines Nutes 33 →L2 eines Nutes 41 →L3 eines Nutes 51 →L4 eines Nutes 5 →L5 eines Nutes 15 →L6 eines Nutes 23 →L6 eines Nutes 32 →L5 eines Nutes 24 →L4 eines Nutes 14 →L3 eines Nutes 6 →L2 eines Nutes 50 →L1 eines Nutes 42.
Ein Strang 3 der W-Phasenwicklung, nämlich ein erstes Ende W3 von W3-Z3, tritt entlang einer Stromflussrichtung aus der ersten Schicht L1 eines Nutes 49 der Wicklung ein, verläuft durch die Wicklung und tritt schließlich aus der ersten Schicht L1 eines Nutes 6 aus.
Die Wicklungsanschlusssequenz lautet: L1 eines Nutes 49 →L2 eines Nutes 3 →L3 eines Nutes 13 →L4 eines Nutes 21 →L5 eines Nutes 31 →L6 eines Nutes 39 →L6 eines Nutes 48 →L5 eines Nutes 40 →L4 eines Nutes 30 →L3 eines Nutes 22 →L2 eines Nutes 12 →L1 eines Nutes 4 →L1 eines Nutes 50 →L2 eines Nutes 4 →L3 eines Nutes 14 →L4 eines Nutes 22 →L5 eines Nutes 32 →L6 eines Nutes 40 →L6 eines Nutes 49 →L5 eines Nutes 41 →L4 eines Nutes 31 →L3 eines Nutes 23 → L2 eines Nutes 13 →L1 eines Nutes 5 →L1 eines Nutes 51 →L2 eines Nutes 5 →L3 eines Nutes 15 →L4 eines Nutes 23 →L5 eines Nutes 33 →L6 eines Nutes 41 →L6 eines Nutes 50 →L5 eines Nutes 42 →L4 eines Nutes 32 →L3 eines Nutes 24 →L2 eines Nutes 14 →L1 eines Nutes 6.

## Revendications

1. Bobinage d'équilibrage à trois brins d'un moteur à six pôles et cinquante-quatre encoches à conducteur plat en cuivre, comprenant:
un bobinage triphasé à conducteur plat en cuivre, réparti de manière symétrique le long de la direction circonférentielle d'un noyau de fer rainuré,
le bobinage triphasé à conducteur plat en cuivre comprenant:
• une portion de conducteur rectiligne (2) disposée dans les encoches du noyau de fer,
• une extrémité de soudage (1) disposée sur un côté d'une extrémité du noyau de fer (2), et
• une extrémité de conducteur de courant (3) disposée sur l'autre côté du noyau de fer (2),
dans lequel les portées des extrémités de soudage (1) sont identiques et les hauteurs des extrémités de soudage (1) sont identiques;
l'extrémité de conducteur de courant (3) étant constituée de quatre types de conducteurs en forme de broche en U et d'un type de conducteur à une broche, une première couche de l'extrémité de conducteur de courant (3) comprenant un conducteur à une broche (4) et un conducteur en U (5) ayant une même portée;
une deuxième couche et une troisième couche comprenant chacune le même type de conducteur en U (6) ayant une même portée;
une quatrième couche et une cinquième couche comprenant chacune le même type de conducteur en U (7) ayant une même portée;
une sixième couche comprenant un conducteur en U (8) ayant une même portée;
le conducteur à une broche (4) comprenant un conducteur de phase U, un conducteur de phase V, un conducteur de phase W et un conducteur de point neutre lorsque le bobinage est réalisé selon un couplage en étoile (Y), les conducteurs de phase U, V et W ainsi que le conducteur de point neutre étant disposés à une extrémité du bobinage dans la première couche du noyau de fer rainuré;
aucun autre conducteur spécial saillant ni fil de pont n'étant prévu.

2. Bobinage d'équilibrage à trois brins du moteur selon la revendication 1, dans lequel:
le bobinage triphasé à conducteur plat en cuivre est un bobinage à six couches, chaque bobinage de phase comprenant trois brins montées en parallèle;
la séquence de connexion de chaque brin parallèle étant configurée comme suit:
• entrée dans la première couche L1 du noyau de fer rainuré;
• passage successif à travers la deuxième couche L2, la troisième couche L3, la quatrième couche L4, la cinquième couche L5 et la sixième couche L6 dans un sens direct;
• passage successif à travers la sixième couche L6, la cinquième couche L5, la quatrième couche L4, la troisième couche L3, la deuxième couche L2 et la première couche L1 dans un sens inverse;
• passage successif à travers la première couche L1, la deuxième couche L2, la troisième couche L3, la quatrième couche L4, la cinquième couche L5 et la sixième couche L6 dans le sens direct;
• passage successif à travers la sixième couche L6, la cinquième couche L5, la quatrième couche L4, la troisième couche L3, la deuxième couche L2 et la première couche L1 dans le sens inverse
• passage successif à travers la première couche L1, la deuxième couche L2, la troisième couche L3, la quatrième couche L4, la cinquième couche L5 et la sixième couche L6 dans le sens direct;
• passage successif à travers la sixième couche L6, la cinquième couche L5, la quatrième couche L4, la troisième couche L3 et la deuxième couche L2 dans le sens inverse;
• sortie finale depuis la première couche L1.

3. Bobinage d'équilibrage à trois brins du moteur selon la revendication 1 ou 2, dans lequel:
les conducteurs de phase U, V et W du bobinage triphasé sont configurés pour adopter un couplage en étoile (Y) ou un couplage en triangle (Δ);
et
le bobinage triphasé est configuré pour adopter un pas de bobinage court ayant une portée Y égale à huit, un pas de bobinage complet ayant une portée Y égale à neuf, ou un pas de bobinage long ayant une portée Y égale à dix.

4. Bobinage d'équilibrage à trois brins du moteur selon la revendication 1 ou 2, dans lequel:
les conducteurs de phase U, V et W ainsi que le conducteur de point neutre sont répartis uniformément à l'extrémité du bobinage dans la première couche du noyau de fer rainuré lorsque le bobinage est réalisé selon un couplage en étoile (Y).

5. Bobinage d'équilibrage à trois brins du moteur selon la revendication 3, dans lequel:
les conducteurs de phase U, V et W ainsi que le conducteur de point neutre sont répartis uniformément à l'extrémité du bobinage dans la première couche du noyau de fer rainuré lorsque le bobinage est réalisé selon un couplage en étoile (Y).

6. Procédé d'utilisation du bobinage de compensation à trois voies du moteur à six pôles et cinquante-quatre rainures à fil de cuivre plat selon la revendication 1 ou 2, le procédé étant mis en œuvre dans l'ordre suivant:
La brin 1 de l'enroulement de phase U, à savoir une première extrémité U1 de U1-X1, entre dans la première couche L1 d'une rainure 1 de l'enroulement dans le sens du flux de courant, et finit par sortir de la première couche L1 d'une rainure 12, et la séquence de connexion de l'enroulement est la suivante : L1 de la rainure 1 → L2 de la rainure 9 → L3 de la rainure 19 → L4 de la rainure 27 → L5 de la rainure 37 → L6 de la rainure 45 → L6 de la rainure 54 → L5 de la rainure 46 → L4 de la rainure 36 → L3 de la rainure 28 → L2 de la rainure 18 → L1 de la rainure 10 → L1 de la rainure 2 → L2 de la rainure 10 → L3 de la rainure 20 → L4 de la rainure 28 → L5 de la rainure 38 → L6 de la rainure 46 → L6 de la rainure 1 → L5 de la rainure 47 → L4 de la rainure 37 → L3 de la rainure 29 → L2 de la rainure 19 → L1 de la rainure 11 → L1 de la rainure 3 → L2 de la rainure 11 → L3 de la rainure 21 → L4 de la rainure 29 → L5 de la rainure 39 → L6 de la rainure 47 → L6 de la rainure 2 → L5 de la rainure 48 → L4 de la rainure 38 → L3 de la rainure 30 → L2 de la rainure 20 → L1 de la rainure 12 ;
La brin 2 de l'enroulement de phase U, à savoir une première extrémité U2 de U2-X2, entre dans la première couche L1 d'une rainure 19 de l'enroulement dans le sens du flux de courant, et sort finalement de la première couche L1 d'une rainure 30, et la séquence de connexion de l'enroulement est la suivante : L1 d'une encoche 19 →L2 d'une encoche 27 →L3 d'une encoche 37 →L4 d'une encoche 45 →L5 d'une encoche 1 →L6 d'une encoche 9 →L6 d'une encoche 18 →L5 d'une encoche 10 →L4 d'une encoche 54 →L3 d'une encoche 46 →L2 d'une encoche 36 →L1 d'une encoche 28 →L1 d'une encoche 20 →L2 d'une encoche 28--->L3 d'une encoche 38 →L4 d'une encoche 46 →L5 d'une encoche 2 →L6 d'une encoche 10 →L6 d'une encoche 19 →L5 d'une encoche 11 →L4 d'une encoche 1 →L3 d'une encoche 47 →L2 d'une encoche 37 →L1 d'une encoche 29 →L1 d'une encoche 21 →L2 d'une encoche 29 →L3 d'une encoche 39 →L4 d'une encoche 47 →L5 d'une encoche 3 →L6 d'une encoche 11 →L6 d'une encoche 20 →L5 d'une encoche 12 →L4 d'une encoche 2 →L3 d'une encoche 48 →L2 d'une encoche 38 →L1 d'une encoche 30.
La brin 3 de l'enroulement de phase U, à savoir une première extrémité U3 de U3-X3, entre dans la première couche L1 d'une encoche 37 de l'enroulement dans le sens du courant, traverse l'enroulement et ressort finalement de la première couche L1 d'une encoche 48. La séquence de connexion de l'enroulement est la suivante : L1 d'une encoche 37 →L2 d'une encoche 45 →L3 d'une encoche 1 →L4 d'une encoche 9 →L5 d'une encoche 19 →L6 d'une encoche 27 →L6 d'une encoche 36 →L5 d'une encoche 28→L4 d'une encoche 18 →L3 d'une encoche 10 →L2 d'une encoche 54 →L1 d'une encoche 46 →L1 d'une encoche 38 →L2 d'une encoche 46 →L3 d'une encoche 2 →L4 d'une encoche 10 →L5 d'une encoche 20 →L6 d'une encoche 28→L6 d'une encoche 37 →L5 d'une encoche 29 →L4 d'une encoche 19 →L3 d'une encoche 11 →L2 d'une encoche 1 →L1 d'une encoche 47 →L1 d'une encoche 39 →L2 d'une encoche 47 →L3 d'une encoche 3 →L4 d'une encoche 11→L5 d'une encoche 21 →L6 d'une encoche 29 →L6 d'une encoche 38 →L5 d'une encoche 30 →L4 d'une encoche 20 →L3 d'une encoche 12 →L2 d'une encoche 2 →L1 d'une encoche 48
La brin 1 de l'enroulement triphasé, à savoir une première extrémité V1 de V1-Y1, entre dans la première couche L1 d'une encoche 7 de l'enroulement dans le sens du courant et ressort finalement de la première couche L1 d'une encoche 18.
La séquence de connexion de l'enroulement est la suivante : L1 d'une encoche 7 →L2 d'une encoche 15→L3 d'une encoche 25 →L4 d'une encoche 33 →L5 d'une encoche 43 →L6 d'une encoche 51 →L6 d'une encoche 6 →L5 d'une encoche 52 →L4 d'une encoche 42 →L3 d'une encoche 34 →L2 d'une encoche 24 →L1 d'une encoche 16→L1 d'une encoche 8 →L2 d'une encoche 16 →L3 d'une encoche 26 →L4 d'une encoche 34 →L5 d'une encoche 44 →L6 d'une encoche 52 →L6 d'une encoche 7→L5 d'une encoche 53 →L4 d'une encoche 43 →L3 d'une encoche 35 →L2 d'une encoche 25 →L1 d'une encoche 17 →L1 d'une encoche 9 →L2 d'une encoche 17→L3 d'une encoche 27 →L4 d'une encoche 35 →L5 d'une encoche 45 →L6 d'une encoche 53 →L6 d'une encoche 8 →L5 d'une encoche 54 →L4 d'une encoche 44 →L3 d'une encoche 36 →L2 d'une encoche 26 →L1 d'une encoche 18.
La brin 2 de l'enroulement triphasé, à savoir une première extrémité V2 de V2-Y2, entre dans la première couche L1 d'une encoche 25 de l'enroulement dans le sens du flux de courant et ressort finalement de la première couche L1 d'une encoche 36.
La séquence de connexion de l'enroulement est la suivante: L1 d'une encoche 25 → L2 d'une encoche 33 → L3 d'une encoche 43 → L4 d'une encoche 51 → L5 d'une encoche 7 → L6 d'une encoche 15 → L6 d'une encoche 24 → L5 d'une encoche 16 → L4 d'une encoche 6 →L3 d'une encoche 52 →L2 d'une encoche 42 →L1 d'une encoche 34 →L1 d'une encoche 26 →L2 d'une encoche 34 →L3 d'une encoche 44 →L4 d'une encoche 52→L5 d'une encoche 8 →L6 d'une encoche 16 →L6 d'une encoche 25 →L 5 d'une encoche 17 →L4 d'une encoche 7 →L3 d'une encoche 53 →L2 d'une encoche 43→L1 d'une encoche 35 →L1 d'une encoche 27 →L2 d'une encoche 35 →L3 d'une encoche 45 →L4 d'une encoche 53 →L5 d'une encoche 9 →L6 d'une encoche 17→L6 d'une encoche 26 →L5 d'une encoche 18 →L4 d'une encoche 8 →L3 d'une encoche 54 →L2 d'une encoche 44 →L1 d'une encoche 36.
La brin 3 de l'enroulement à phase en V, à savoir une première extrémité V3 de V3-Y3, entre dans la première couche L1 d'une rainure 43 de l'enroulement dans le sens du flux de courant, et sort finalement de la première couche L1 d'une rainure 54, et la séquence de connexion de l'enroulement est la suivante : L1 de la rainure 43 → L2 de la rainure 51 → L3 de la rainure 7 → L4 de la rainure 15 → L5 de la rainure 25 → L6 de la rainure 33 → L6 de la rainure 42 → L5 de la rainure 34 → L4 de la rainure 24 → L3 de la rainure 16 → L2 de la rainure 6 → L1 de la rainure 52 → L1 de la rainure 4 4 → L2 de la rainure 52 → L3 de la rainure 8 → L4 de la rainure 16 → L5 de la rainure 26 → L6 de la rainure 34 → L6 de la rainure 43 → L5 de la rainure 35 → L4 de la rainure 25 → L3 de la rainure 17 → L2 de la rainure 7 → L1 de la rainure 53 → L1 de la rainure 45 → L2 de la rainure 53 → L3 de la rainure 9 → L4 de la rainure 17 → L5 de la rainure 27 → L6 de la rainure 35 → L6 de la rainure 44 → L5 de la rainure 36 → L4 de la rainure 26 → L3 de la rainure 18 → L2 de la rainure 8 → L1 de la rainure 54.
La brin 1 de l'enroulement de phase W, à savoir une première extrémité W1 de W1-Z1, entre dans la première couche L1 d'une rainure 13 de l'enroulement dans le sens du flux de courant, et sort finalement de la première couche L1 d'une rainure 24, et la séquence de connexion de l'enroulement est la suivante : L1 de la rainure 13 → L2 de la rainure 21 → L3 de la rainure 31 → L4 de la rainure 39 → L5 de la rainure 49 → L6 de la rainure 3 → L6 de la rainure 12 → L5 de la rainure 4 → L4 de la rainure 48 → L3 de la rainure 40 → L2 de la rainure 30 → L1 de la rainure 22 → L1 de la rainure 1 4 → L2 de la rainure 22 → L3 de la rainure 32 → L4 de la rainure 40 → L5 de la rainure 50 → L6 de la rainure 4 → L6 de la rainure 13 → L5 de la rainure 5 → L4 de la rainure 49 → L3 de la rainure 41 → L2 de la rainure 31 → L1 de la rainure 23 → L1 de la rainure 15 → L2 de la rainure 23 → L3 de la rainure 33 → L4 de la rainure 41 → L5 de la rainure 51 → L6 de la rainure 5 → L6 de la rainure 14 → L5 de la rainure 6 → L4 de la rainure 50 → L3 de la rainure 42 → L2 de la rainure 32 → L1 de la rainure 24.
La brin 2 de l'enroulement de phase W, à savoir une première extrémité W2 de W2-Z2, entre dans la première couche L1 d'une rainure 31 de l'enroulement dans le sens du flux de courant, et sort finalement de la première couche L1 d'une rainure 42, et la séquence de connexion de l'enroulement est la suivante : L1 de la rainure 31 → L2 de la rainure 39 → L3 de la rainure 49 → L4 de la rainure 3 → L5 de la rainure 13 → L6 de la rainure 21 → L6 de la rainure 30 → L5 de la rainure 22 → L4 de la rainure 12 → L3 de la rainure 4 → L2 de la rainure 48 → L1 de la rainure 40 → L1 de la rainure 3 2 → L2 de la rainure 40 → L3 de la rainure 50 → L4 de la rainure 4 → L5 de la rainure 14 → L6 de la rainure 22 → L6 de la rainure 31 → L5 de la rainure 23 → L4 de la rainure 13 → L3 de la rainure 5 → L2 de la rainure 49 → L1 de la rainure 41 → L1 de la rainure 33 → L2 de la rainure 41 → L3 de la rainure 51 → L4 de la rainure 5 → L5 de la rainure 15 → L6 de la rainure 23 → L6 de la rainure 32 → L5 de la rainure 24 → L4 de la rainure 14 → L3 de la rainure 6 → L2 de la rainure 50 → L1 de la rainure 42.
La brin 3 de l'enroulement à phase W, à savoir une première extrémité W3 de W3-Z3, entre dans la première couche L1 d'une rainure 49 de l'enroulement dans le sens du flux de courant, et sort finalement de la première couche L1 d'une rainure 6, et la séquence de connexion de l'enroulement est la suivante : L1 de la rainure 49 → L2 de la rainure 3 → L3 de la rainure 13 → L4 de la rainure 21 → L5 de la rainure 31 → L6 de la rainure 39 → L6 de la rainure 48 → L5 de la rainure 40 → L4 de la rainure 30 → L3 de la rainure 22 → L2 de la rainure 12 → L1 de la rainure 4 → L1 de la rainure 5 0 → L2 de la rainure 4 → L3 de la rainure 14 → L4 de la rainure 22 → L5 de la rainure 32 → L6 de la rainure 40 → L6 de la rainure 49 → L5 de la rainure 41 → L4 de la rainure 31 → L3 de la rainure 23 → L2 de la rainure 13 → L1 de la rainure 5 → L1 de la rainure 51 → L2 de la rainure 5 → L3 de la rainure 15 → L4 de la rainure 23 → L5 de la rainure 33 → L6 de la rainure 41 → L6 de la rainure 50 → L5 de la rainure 42 → L4 de la rainure 32 → L3 de la rainure 24 → L2 de la rainure 14 → L1 de la rainure 6.

7. Procédé d'utilisation du bobinage équilibré à trois phases du moteur à six pôles à 54 rainures à fil de cuivre plat selon la revendication 3, le procédé étant mis en œuvre dans l'ordre suivant:
La brin 1 de l'enroulement de phase U, à savoir une première extrémité U1 de U1-X1, entre dans la première couche L1 d'une rainure 1 de l'enroulement dans le sens du flux de courant et finit par sortir de la première couche L1 d'une rainure 12. La séquence de connexion de l'enroulement est la suivante:
L1 de la rainure 1 → L2 de la rainure 9 → L3 de la rainure 19 → L4 de la rainure 27 → L5 de la rainure 37 → L6 de la rainure 45 → L6 de la rainure 54 → L5 de la rainure 46 → L4 de la rainure 36 → L3 de la rainure 28 → L2 de la rainure 18 → L1 de la rainure 10 → L1 de la rainure 2 → L2 de la rainure 10 → L3 de la rainure 20 → L4 de la rainure 28 → L5 de la rainure 38 → L6 de la rainure 46 → L6 de la rainure 1 → L5 de la rainure 47 → L4 de la rainure 37 → L3 de la rainure 29 → L2 de la rainure 19 → L1 de la rainure 11 → L1 de la rainure 3 → L2 de la rainure 11 → L3 de la rainure 21 → L4 de la rainure 29 → L5 de la rainure 39 → L6 de la rainure 47 → L6 de la rainure 2 → L5 de la rainure 48 → L4 de la rainure 38 → L3 de la rainure 30 → L2 de la rainure 20 → L1 de la rainure 12.
La brin 2 de l'enroulement de phase U, à savoir une première extrémité U2 de U2-X2, entre dans la première couche L1 d'une rainure 19 de l'enroulement dans le sens du flux de courant et sort finalement de la première couche L1 d'une rainure 30. La séquence de raccordement de l'enroulement est la suivante : L1 de la rainure 19 → L2 de la rainure 27 → L3 de la rainure 37 → L4 de la rainure 45 → L5 de la rainure 1 → L6 de la rainure 9 → L6 de la rainure 18 → L5 de la rainure 10 → L4 de la rainure 54 → L3 de la rainure 46→ L2 de la rainure 36 → L1 de la rainure 28 → L1 de la rainure 2 0 → L2 de la rainure 28 → L3 de la rainure 38 → L4 de la rainure 46 → L5 de la rainure 2 → L6 de la rainure 10 → L6 de la rainure 19 → L5 de la rainure 11 → L4 de la rainure 1 → L3 de la rainure 47 → L2 de la rainure 37 → L1 de la rainure 29 → L1 de la rainure 21 → L2 de la rainure 29 → L3 de la rainure 39 → L4 de la rainure 47 → L5 de la rainure 3 → L6 de la rainure 11 → L6 de la rainure 20 → L5 de la rainure 12 → L4 de la rainure 2 → L3 de la rainure 48 → L2 de la rainure 38 → L1 de la rainure 30.
La brin 3 de l'enroulement de phase U, à savoir une première extrémité U3 de U3-X3, entre dans la première couche L1 d'une rainure 37 de l'enroulement dans le sens du flux de courant et sort finalement de la première couche L1 d'une rainure 48. La séquence de raccordement de l'enroulement est la suivante : L1 de la rainure 37 → L2 de la rainure 45 → L3 de la rainure 1 → L4 de la rainure 9 → L5 de la rainure 19 → L6 de la rainure 27 → L6 de la rainure 36 → L5 de la rainure 28 → L4 de la rainure 18 → L3 de la rainure 10 → L2 de la rainure 54 → L1 de la rainure 46 → L1 de la rainure 3 8 → L2 de la rainure 46 → L3 de la rainure 2 → L4 de la rainure 10 → L5 de la rainure 20 → L6 de la rainure 28 → L6 de la rainure 37 → L5 de la rainure 29 → L4 de la rainure 19 → L3 de la rainure 11 → L2 de la rainure 1 → L1 de la rainure 47 → L1 de la rainure 39 → L2 de la rainure 47 → L3 de la rainure 3 → L4 de la rainure 11 → L5 de la rainure 21 → L6 de la rainure 29 → L6 de la rainure 38 → L5 de la rainure 30 → L4 de la rainure 20 → L3 de la rainure 12 → L2 de la rainure 2 → L1 de la rainure 48.
La brin 1 de l'enroulement triphasé, à savoir une première extrémité V1 de V1-Y1, entre dans la première couche L1 d'une rainure 7 de l'enroulement dans le sens du flux de courant et sort finalement de la première couche L1 d'une rainure 18. La séquence de raccordement de l'enroulement est la suivante : L1 de la rainure 7 → L2 de la rainure 15 → L3 de la rainure 25 → L4 de la rainure 33 → L5 de la rainure 43 → L6 de la rainure 51 → L6 de la rainure 6 → L5 de la rainure 52 → L4 de la rainure 42 → L3 de la rainure 34 → L2 de la rainure 24 → L1 de la rainure 16 → L1 de la rainure 8 → L2 de la rainure 16 → L3 de la rainure 26 → L4 de la rainure 34 → L5 de la rainure 44 → L6 de la rainure 52 → L6 de la rainure 7 → L5 de la rainure 53 → L4 de la rainure 43 → L3 de la rainure 35 → L2 de la rainure 25 → L1 de la rainure 17 → L1 de la rainure 9 → L2 de la rainure 17 → L3 de la rainure 27 → L4 de la rainure 35 → L5 de la rainure 45 → L6 de la rainure 53 → L6 de la rainure 8 → L5 de la rainure 54 → L4 de la rainure 44 → L3 de la rainure 36 → L2 de la rainure 26 → L1 de la rainure 18.
La brin 2 de l'enroulement triphasé, à savoir la première extrémité V2 de V2-Y2, entre dans la première couche L1 d'une rainure 25 de l'enroulement dans le sens du flux de courant et sort finalement de la première couche L1 d'une rainure 36. La séquence de raccordement de l'enroulement est la suivante : L1 de la rainure 25 → L2 de la rainure 33 → L3 de la rainure 43 → L4 de la rainure 51 → L5 de la rainure 7 → L6 de la rainure 15 → L6 de la rainure 24 → L5 de la rainure 16 → L4 de la rainure 6 → L3 de la rainure 52 → L2 de la rainure 42 → L1 de la rainure 34 → L1 de la rainure 2 6 → L2 de la rainure 34 → L3 de la rainure 44 → L4 de la rainure 52 → L5 de la rainure 8 → L6 de la rainure 16 → L6 de la rainure 25 → L5 de la rainure 17 → L4 de la rainure 7 → L3 de la rainure 53 → L2 de la rainure 43 → L1 de la rainure 35 → L1 de la rainure 27 → L2 de la rainure 35 → L3 de la rainure 45 → L4 de la rainure 53 → L5 de la rainure 9 → L6 de la rainure 17 → L6 de la rainure 26 → L5 de la rainure 18 → L4 de la rainure 8 → L3 de la rainure 54 → L2 de la rainure 44 → L1 de la rainure 36.
La brin 3 de l'enroulement triphasé, à savoir la première extrémité V3 de V3-Y3, entre dans la première couche L1 d'une rainure 43 de l'enroulement dans le sens du flux de courant et sort finalement de la première couche L1 d'une rainure 54. La séquence de raccordement de l'enroulement est la suivante : L1 de la rainure 43 → L2 de la rainure 51 → L3 de la rainure 7 → L4 de la rainure 15 → L5 de la rainure 25 → L6 de la rainure 33 → L6 de la rainure 42 → L5 de la rainure 34 → L4 de la rainure 24 → L3 de la rainure 16 → L2 de la rainure 6 → L1 de la rainure 52 → L1 de la rainure 4 4 → L2 de la rainure 52 → L3 de la rainure 8 → L4 de la rainure 16 → L5 de la rainure 26 → L6 de la rainure 34 → L6 de la rainure 43 → L5 de la rainure 35 → L4 de la rainure 25 → L3 de la rainure 17 → L2 de la rainure 7 → L1 de la rainure 53 → L1 de la rainure 45 → L2 de la rainure 53 → L3 de la rainure 9 → L4 de la rainure 17 → L5 de la rainure 27 → L6 de la rainure 35 → L6 de la rainure 44 → L5 de la rainure 36 → L4 de la rainure 26 → L3 de la rainure 18 → L2 de la rainure 8 → L1 de la rainure 54.
La brin 1 de l'enroulement de phase W, à savoir la première extrémité W1 de W1-Z1, entre dans la première couche L1 d'une rainure 13 de l'enroulement dans le sens du flux de courant et sort finalement de la première couche L1 d'une rainure 24. La séquence de raccordement de l'enroulement est la suivante : L1 de la rainure 13 → L2 de la rainure 21 → L3 de la rainure 31 → L4 de la rainure 39 → L5 de la rainure 49 → L6 de la rainure 3 → L6 de la rainure 12 → L5 de la rainure 4→ L4 de la rainure 48 → L3 de la rainure 40 → L2 de la rainure 30 → L1 de la rainure 22 → L1 de la rainure 1 4→ L2 de la rainure 22 → L3 de la rainure 32 → L4 de la rainure 40 → L5 de la rainure 50 → L6 de la rainure 4→ L6 de la rainure 13 → L5 de la rainure 5 → L4 de la rainure 49 → L3 de la rainure 41 → L2 de la rainure 31 → L1 de la rainure 23 → L1 de la rainure 15 → L2 de la rainure 23 → L3 de la rainure 33 → L4 de la rainure 41 → L5 de la rainure 51 → L6 de la rainure 5 → L6 de la rainure 14 → L5 de la rainure 6 → L4 de la rainure 50 → L3 de la rainure 42 → L2 de la rainure 32 → L1 de la rainure 24.
La brin 2 de l'enroulement de phase W, à savoir la première extrémité W2 de W2-Z2, entre dans la première couche L1 d'une rainure 31 de l'enroulement dans le sens du flux de courant et sort finalement de la première couche L1 d'une rainure 42. La séquence de raccordement de l'enroulement est la suivante : L1 de la rainure 31 → L2 de la rainure 39 → L3 de la rainure 49 → L4 de la rainure 3 → L5 de la rainure 13 → L6 de la rainure 21 → L6 de la rainure 30 → L5 de la rainure 22 → L4 de la rainure 12 → L3 de la rainure 4 → L2 de la rainure 48 → L1 de la rainure 40 → L1 de la rainure 3 2 → L2 de la rainure 40 → L3 de la rainure 50 → L4 de la rainure 4 → L5 de la rainure 14 → L6 de la rainure 22 → L6 de la rainure 31 → L5 de la rainure 23 → L4 de la rainure 13 → L3 de la rainure 5 → L2 de la rainure 49 → L1 de la rainure 41 → L1 de la rainure 33 → L2 de la rainure 41 → L3 de la rainure 51 → L4 de la rainure 5 → L5 de la rainure 15 → L6 de la rainure 23 → L6 de la rainure 32 → L5 de la rainure 24 → L4 de la rainure 14 → L3 de la rainure 6 → L2 de la rainure 50 → L1 de la rainure 42.
La brin 3 de l'enroulement de phase W, à savoir la première extrémité W3 de W3-Z3, entre dans la première couche L1 d'une rainure 49 de l'enroulement dans le sens du flux de courant et sort finalement de la première couche L1 d'une rainure 6.
La séquence de raccordement de l'enroulement est la suivante : L1 de la rainure 49 → L2 de la rainure 3 → L3 de la rainure 13 → L4 de la rainure 21 → L5 de la rainure 31 → L6 de la rainure 39 → L6 de la rainure 48 → L5 de la rainure 40 → L4 de la rainure 30 → L3 de la rainure 22 → L2 de la rainure 12 → L1 de la rainure 4 → L1 de la rainure 5 0 → L2 de la rainure 4 → L3 de la rainure 14 → L4 de la rainure 22 → L5 de la rainure 32 → L6 de la rainure 40 → L6 de la rainure 49 → L5 de la rainure 41 → L4 de la rainure 31 → L3 de la rainure 23 → L2 de la rainure 13 → L1 de la rainure 5 → L1 de la rainure 51 → L2 de la rainure 5 → L3 de la rainure 15 → L4 de la rainure 23 → L5 de la rainure 33 → L6 de la rainure 41 → L6 de la rainure 50 → L5 de la rainure 42 → L4 de la rainure 32 → L3 de la rainure 24 → L2 de la rainure 14 → L1 de la rainure 6.

8. La brin 1 de l'enroulement de phase U, à savoir la première extrémité U1 de U1-X1, entre dans la première couche L1 d'une rainure 1 de l'enroulement dans le sens du flux de courant et sort finalement de la première couche L1 d'une rainure 12. La séquence de raccordement de l'enroulement est la suivante : L1 de la rainure 1 → L2 de la rainure 9 → L3 de la rainure 19→ L4 de la rainure 27 → L5 de la rainure 37 → L6 de la rainure 45 → L6 de la rainure 54 → L5 de la rainure 46 → L4 de la rainure 36 → L3 de la rainure 28 → L2 de la rainure 18 → L1 de la rainure 10 → L1 de la rainure 2 → L2 de la rainure 10 → L3 de la rainure 20 → L4 de la rainure 28 → L5 de la rainure 38 → L6 de la rainure 46 → L6 de la rainure 1 → L5 de la rainure 47 → L4 de la rainure 37 → L3 de la rainure 29 → L2 de la rainure 19 → L1 de la rainure 11 → L1 de la rainure 3 → L2 de la rainure 11 → L3 de la rainure 21 → L4 de la rainure 29 → L5 de la rainure 39 → L6 de la rainure 47 → L6 de la rainure 2 → L5 de la rainure 48 → L4 de la rainure 38 → L3 de la rainure 30 → L2 de la rainure 20 → L1 de la rainure 12.
La brin 2 de l'enroulement de phase U, à savoir la première extrémité U2 de U2-X2, entre dans la première couche L1 d'une rainure 19 de l'enroulement dans le sens du flux de courant et sort finalement de la première couche L1 d'une rainure 30.
La séquence de raccordement de l'enroulement est la suivante : L1 de la rainure 19 → L2 de la rainure 27 → L3 de la rainure 37 → L4 de la rainure 45 → L5 de la rainure 1 → L6 de la rainure 9 → L6 de la rainure 18 → L5 de la rainure 10→ L4 de la rainure 54 → L3 de la rainure 46 → L2 de la rainure 36 → L1 de la rainure 28 → L1 de la rainure 2 0 → L2 de la rainure 28 → L3 de la rainure 38 → L4 de la rainure 46 → L5 de la rainure 2 → L6 de la rainure 10 → L6 de la rainure 19 → L5 de la rainure 11 → L4 de la rainure 1 → L3 de la rainure 47 → L2 de la rainure 37 → L1 de la rainure 29 → L1 de la rainure 21 → L2 de la rainure 29 → L3 de la rainure 39 → L4 de la rainure 47 → L5 de la rainure 3 → L6 de la rainure 11 → L6 de la rainure 20 → L5 de la rainure 12 → L4 de la rainure 2 → L3 de la rainure 48 → L2 de la rainure 38 → L1 de la rainure 30.
La brin 3 de l'enroulement de phase U, à savoir la première extrémité U3 de U3-X3, entre dans la première couche L1 d'une rainure 37 de l'enroulement dans le sens du flux de courant et sort finalement de la première couche L1 d'une rainure 48.
La séquence de raccordement de l'enroulement est la suivante : L1 de la rainure 37 → L2 de la rainure 45 → L3 de la rainure 1 → L4 de la rainure 9 → L5 de la rainure 19 → L6 de la rainure 27 → L6 de la rainure 36 → L5 de la rainure 28→ L4 de la rainure 18 → L3 de la rainure 10 → L2 de la rainure 54 → L1 de la rainure 46 → L1 de la rainure 3 8 → L2 de la rainure 46 → L3 de la rainure 2 → L4 de la rainure 10 → L5 de la rainure 20 → L6 de la rainure 28 → L6 de la rainure 37 → L5 de la rainure 29 → L4 de la rainure 19 → L3 de la rainure 11 → L2 de la rainure 1 → L1 de la rainure 47 → L1 de la rainure 39 → L2 de la rainure 47 → L3 de la rainure 3 → L4 de la rainure 11→ L5 de la rainure 21 → L6 de la rainure 29 → L6 de la rainure 38 → L5 de la rainure 30 → L4 de la rainure 20 → L3 de la rainure 12 → L2 de la rainure 2 → L1 de la rainure 48.
La brin 1 de l'enroulement triphasé, à savoir la première extrémité V1 de V1-Y1, entre dans la première couche L1 de la rainure 7 de l'enroulement dans le sens du flux de courant et sort finalement de la première couche L1 de la rainure 18.
La séquence de raccordement de l'enroulement est la suivante : L1 de la rainure 7 → L2 de la rainure 15 → L3 de la rainure 25 → L4 de la rainure 33 → L5 de la rainure 43 → L6 de la rainure 51 → L6 de la rainure 6 → L5 de la rainure 52 → L4 de la rainure 42 → L3 de la rainure 34 → L2 de la rainure 24 → L1 de la rainure 16 → L1 de la rainure 8 → L2 de la rainure 16 → L3 de la rainure 26 → L4 de la rainure 34 → L5 de la rainure 44 → L6 de la rainure 52 → L6 de la rainure 7 → L5 de la rainure 53 → L4 de la rainure 43 → L3 de la rainure 35 → L2 de la rainure 25 → L1 de la rainure 17 → L1 de la rainure 9 → L2 de la rainure 17 → L3 de la rainure 27 → L4 de la rainure 35 → L5 de la rainure 45 → L6 de la rainure 53 → L6 de la rainure 8 → L5 de la rainure 54 → L4 de la rainure 44 → L3 de la rainure 36 → L2 de la rainure 26 → L1 de la rainure 18.
La brin 2 de l'enroulement triphasé, à savoir la première extrémité V2 de V2-Y2, entre dans la première couche L1 de la rainure 25 de l'enroulement dans le sens du flux de courant et sort finalement de la première couche L1 de la rainure 36.
La séquence de raccordement de l'enroulement est la suivante : L1 de la rainure 25 → L2 de la rainure 33 → L3 de la rainure 43 → L4 de la rainure 51 → L5 de la rainure 7 → L6 de la rainure 15 → L6 de la rainure 24 → L5 de la rainure 16 → L4 de la rainure 6 → L3 de la rainure 52 → L2 de la rainure 42 → L1 de la rainure 34 → L1 de la rainure 2 6 → L2 de la rainure 34 → L3 de la rainure 44 → L4 de la rainure 52 → L5 de la rainure 8 → L6 de la rainure 16 → L6 de la rainure 25 → L5 de la rainure 17 → L4 de la rainure 7 → L3 de la rainure 53 → L2 de la rainure 43 → L1 de la rainure 35 → L1 de la rainure 27 → L2 de la rainure 35 → L3 de la rainure 45 → L4 de la rainure 53 → L5 de la rainure 9 → L6 de la rainure 17 → L6 de la rainure 26 → L5 de la rainure 18 → L4 de la rainure 8 → L3 de la rainure 54 → L2 de la rainure 44 → L1 de la rainure 36.
La brin 3 de l'enroulement triphasé, à savoir une première extrémité V3 de V3-Y3, entre dans la première couche L1 d'une encoche 43 de l'enroulement dans le sens du courant, traverse l'enroulement et ressort finalement de la première couche L1 d'une encoche 54.
La séquence de connexion de l'enroulement est la suivante : L1 d'une encoche 43 →L2 d'une encoche 51 →L3 d'une encoche 7 →L4 d'une encoche 15 →L5 d'une encoche 25 →L6 d'une encoche 33 →L6 d'une encoche 42 →L5 d'une encoche 34 →L4 d'une encoche 24 →L3 d'une encoche 16 →L 2 d'une encoche 6 →L1 d'une encoche 52 L1 d'une encoche 44 →L2 d'une encoche 52 →L3 d'une encoche 8 →L4 d'une encoche 16 →L5 d'une encoche 26 →L6 d'une encoche 34 →L6 d'une encoche 43 →L5 d'une encoche 35 →L4 d'une encoche 25 →L3 d'une encoche 17 →L2 d'une encoche 7→L1 d'une encoche 53 →L1 d'une encoche 45 →L2 d'une encoche 53 →L3 d'une encoche 9 →L4 d'une encoche 17 →L5 d'une encoche 27 →L6 d'une encoche 35 →L6 d'une encoche 44 →L5 d'une encoche 36 →L4 d'une encoche 26 →L3 d'une encoche 18 →L2 d'une encoche 8 →L1 d'une encoche 54.
Une brin 1 de l'enroulement de phase W, à savoir une première extrémité W1 de W1-Z1, entre dans la première couche L1 d'une encoche 13 de l'enroulement dans le sens du courant, traverse l'enroulement et ressort finalement de la première couche L1 d'une encoche 24.
La séquence de connexion de l'enroulement est la suivante : L1 d'une encoche 13 →L2 d'une encoche 21 →L3 d'une encoche 31 →L4 d'une encoche 39 →L5 d'une encoche 49 →L6 d'une encoche 3 →L6 d'une encoche 12 →L5 d'une encoche 4 →L4 d'une encoche 48 →L3 d'une encoche 40 L2 d'une encoche 30 →L1 d'une encoche 22 →L1 d'une encoche 14 →L2 d'une encoche 22 →L3 d'une encoche 32 →L4 d'une encoche 40 →L5 d'une encoche 50 →L6 d'une encoche 4 →L6 d'une encoche 13 →L5 d'une encoche 5 →L4 d'une encoche 49 →L3 d'une encoche 41 →L2 d'une encoche 31 →L1 d'une encoche 23 →L1 d'une encoche 15 →L2 d'une encoche 23 →L3 d'une encoche 33 →L4 d'une encoche 41 →L5 d'une encoche 51 →L6 d'une encoche 5 →L6 d'une encoche 14 →L5 d'une encoche 6 →L4 d'une encoche 50 →L3 d'une encoche 42 →L2 d'une encoche 32 →L1 d'une encoche 24.
Une brin 2 de l'enroulement de phase W, à savoir une première extrémité W2 de W2-Z2, entre dans la première couche L1 d'une encoche 31 de l'enroulement dans le sens du courant, traverse l'enroulement et ressort finalement de la première couche L1 d'une encoche 42.
La séquence de connexion de l'enroulement est la suivante : L1 d'une encoche 31 → L2 d'une encoche 39 →L3 d'une encoche 49 →L4 d'une encoche 3 →L5 d'une encoche 13 →L6 d'une encoche 21 →L6 d'une encoche 30 →L5 d'une encoche 22
→L4 d'une encoche 12 →L3 d'une encoche 4 →L2 d'une encoche 48 →L1 d'une encoche 40 →L1 d'une encoche 32 →L2 d'une encoche 40 →L3 d'une encoche 50 →L4 d'une encoche 4 →L5 d'une encoche 14 →L6 d'une encoche 22 →L6 d'une encoche 31 →L5 d'une encoche 23 →L4 d'une encoche 13 →L3 d'une encoche 5 →L2 d'une encoche 49 →L1 d'une encoche 41 →L1 d'une encoche 33 →L2 d'une encoche 41 →L3 d'une encoche 51 →L4 d'une encoche 5 →L5 d'une encoche 15 →L6 d'une encoche 23 →L6 d'une encoche 32 →L5 d'une encoche 24 →L4 d'une encoche 14 →L3 d'une encoche 6 →L2 d'une encoche 50 →L1 d'une encoche 42.
Une brin 3 de l'enroulement de phase W, à savoir une première extrémité W3 de W3-Z3, entre dans la première couche L1 d'une encoche 49 de l'enroulement dans le sens du courant, traverse l'enroulement et ressort finalement de la première couche L1 d'une encoche 6.
La séquence de connexion de l'enroulement est la suivante : L1 d'une encoche 49 →L2 d'une encoche 3 →L3 d'une encoche 13 →L4 d'une encoche 21 →L5 d'une encoche 31→L6 d'une encoche 39 →L6 d'une encoche 48 →L5 d'une encoche 40 →L4 d'une encoche 30 →L3 d'une encoche 22 →L2 d'une encoche 12 →L1 d'une encoche 4 →L1 d'une encoche 50 →L2 d'une encoche 4 →L3 d'une encoche 14 →L4 d'une encoche 22 →L5 d'une encoche 32 →L6 d'une encoche 40 →L6 d'une encoche 49 →L5 d'une encoche 41 →L4 d'une encoche 31 →L3 d'une encoche 23 →L2 d'une encoche 13 →L1 d'une encoche 5 →L1 d'une encoche 51 →L2 d'une encoche 5 →L3 d'une encoche 15 →L4 d'une encoche 23 →L5 d'une encoche 33 →L6 d'une encoche 41 →L6 d'une encoche 50 →L5 d'une encoche 42 →L4 d'une encoche 32 →L3 d'une encoche 24 →L2 d'une encoche 14 →L1 d'une encoche 6.

9. Procédé d'utilisation de l'enroulement symétrique à trois brins du moteur à six pôles avec cinquante-quatre encoches et conducteurs plats en cuivre selon la revendication 5, le procédé étant mis en oeuvre dans l'ordre comme suit :
Une brin 1 de l'enroulement de phase U, à savoir une première extrémité U1 de U1-X1, entre dans la première couche L1 d'une encoche 1 de l'enroulement dans le sens du flux de courant, traverse l'enroulement et ressort finalement de la première couche L1 d'une encoche 12.
La séquence de connexion de l'enroulement est la suivante : L1 d'une encoche 1 →L2 d'une encoche 9 →L3 d'une encoche 19 →L4 d'une encoche 27 →L5 d'une encoche 37 →L6 d'une encoche 45 →L6 d'une encoche 54 →L5 d'une encoche 46 →L4 d'une encoche 36 →L3 d'une encoche 28 →L2 d'une encoche 18 →L1 d'une encoche 10 →L1 d'une encoche 2 →L2 d'une encoche 10 →L3 d'une encoche 20 →L4 d'une encoche 28→L5 d'une encoche 38 →L6 d'une encoche 46 →L6 d'une encoche 1 →L5 d'une encoche 47 →L4 d'une encoche 37 →L3 d'une encoche 29 →L2 d'une encoche 19 →L1 d'une encoche 11 →L1 d'une encoche 3 →L2 d'une encoche 11 →L3 d'une encoche 21 →L4 d'une encoche 29 →L5 d'une encoche 39 →L6 d'une encoche 47 →L6 d'une encoche 2 →L5 d'une encoche 48 →L4 d'une encoche 38 →L3 d'une encoche 30 →L2 d'une encoche 20 →L1 d'une encoche 12.
Une brin 2 de l'enroulement de phase U, à savoir une première extrémité U2 de U2-X2, entre dans la première couche L1 d'une encoche 19 de l'enroulement dans le sens du courant, traverse l'enroulement et ressort finalement de la première couche L1 d'une encoche 30.
La séquence de connexion de l'enroulement est la suivante : L1 d'une encoche 19 →L2 d'une encoche 27 →L3 d'une encoche 37 →L4 d'une encoche 45 →L5 d'une encoche 1 →L6 d'une encoche 9 →L6 d'une encoche 18 →L5 d'une encoche 10 →L4 d'une encoche 54 →L3 d'une encoche 46 →L2 d'une encoche 36 →L1 d'une encoche 28 →L1 d'une encoche 20 →L2 d'une encoche 28 →L3 d'une encoche 38 →L4 d'une encoche 46 →L5 d'une encoche 2 →L6 d'une encoche 10 →L6 d'une encoche 19 →L5 d'une encoche 11 →L4 d'une encoche 1 →L3 d'une encoche 47 →L2 d'une encoche 37 →L1 d'une encoche 29 →L1 d'une encoche 21 →L2 d'une encoche 29 →L3 d'une encoche 39 →L4 d'une encoche 47 →L5 d'une encoche 3 →L6 d'une encoche 11 →L6 d'une encoche 20 →L5 d'une encoche 12 →L4 d'une encoche 2 →L3 d'une encoche 48 →L2 d'une encoche 38 →L1 d'une encoche 30.
Une brin 3 de l'enroulement de phase U, à savoir une première extrémité U3 de U3-X3, entre dans la première couche L1 d'une encoche 37 de l'enroulement dans le sens du courant, traverse l'enroulement et ressort finalement de la première couche L1 d'une encoche 48.
La séquence de connexion de l'enroulement est la suivante : L1 d'une encoche 37 →L2 d'une encoche 45 →L3 d'une encoche 1 →L4 d'une encoche 9 →L5 d'une encoche 19 →L6 d'une encoche 27 →L6 d'une encoche 36 →L5 d'une encoche 28 →L4 d'une encoche 18 →L3 d'une encoche 10 →L2 d'une encoche 54 →L1 d'une encoche 46 →L1 d'une encoche 38 →L2 d'une encoche 46 →L3 d'une encoche 2 →L4 d'une encoche 10 →L5 d'une encoche 20 →L6 d'une encoche 28 →L6 d'une encoche 37 →L5 d'une encoche 29 →L4 d'une encoche 19 →L3 d'une encoche 11 →L2 d'une encoche 1 →L1 d'une encoche 47 →L1 d'une encoche 39 →L2 d'une encoche 47 →L3 d'une encoche 3 →L4 d'une encoche 11 →L5 d'une encoche 21 →L6 d'une encoche 29 →L6 d'une encoche 38 →L5 d'une encoche 30 →L4 d'une encoche 20 →L3 d'une encoche 12 →L2 d'une encoche 2 →L1 d'une encoche 48.
Une brin 1 de l'enroulement de phase V, à savoir une première extrémité V1 de V1-Y1, entre dans la première couche L1 d'une encoche 7 de l'enroulement dans le sens du courant, traverse l'enroulement et ressort finalement de la première couche L1 d'une encoche 18.
La séquence de connexion de l'enroulement est la suivante : L1 d'une encoche 7 →L2 d'une encoche 15 →L3 d'une encoche 25 →L4 d'une encoche 33 →L5 d'une encoche 43 →L6 d'une encoche 51 →L6 d'une encoche 6 →L5 d'une encoche 52 →L4 d'une encoche 42 →L3 d'une encoche 34 →L2 d'une encoche 24 →L1 d'une encoche 16 →L1 d'une encoche 8 →L2 d'une encoche 16 →L3 d'une encoche 26 →L4 d'une encoche 34 →L5 d'une encoche 44 →L6 d'une encoche 52 →L6 d'une encoche 7 →L5 d'une encoche 53 →L4 d'une encoche 43 →L3 d'une encoche 35 →L2 d'une encoche 25 →L1 d'une encoche 17 →L1 d'une encoche 9 →L2 d'une encoche 17 →L3 d'une encoche 27 →L4 d'une encoche 35 →L5 d'une encoche 45 →L6 d'une encoche 53 -L6 d'une encoche 8 →L5 d'une encoche 54 →L4 d'une encoche 44 →L3 d'une encoche 36 →L2 d'une encoche 26 →L1 d'une encoche 18.
Une brin 2 de l'enroulement de phase V, à savoir une première extrémité V2 de V2-Y2, entre dans la première couche L1 d'une encoche 25 de l'enroulement dans le sens du flux de courant et ressort finalement de la première couche L1 d'une encoche 36. L'ordre de connexion de l'enroulement est le suivant :
L1 de la encoche 25 → L2 de la encoche 33 → L3 de la encoche 43 → L4 de la encoche 51 → L5 de la encoche 7 → L6 de la encoche 15 → L6 de la encoche 24 → L5 de la encoche 16 → L4 de la encoche 6 → L3 de la encoche 52 → L2 de la encoche 42 → L1 de la encoche 34 → L1 de la encoche 26 → L2 de la encoche 34 → L3 de la encoche 44 → L4 de la encoche 52 → L5 de la encoche 8 → L6 de la encoche 16 → L6 de la encoche 25 → L5 de la encoche 17 → L4 de la encoche 7 → L3 de la encoche 53 → L2 de la encoche 43 → L1 de la encoche 35 → L1 de la encoche 27 → L2 de la encoche 35 → L3 de la encoche 45 → L4 de la encoche 53 → L5 de la encoche 9 → L6 de la encoche 17 → L6 de la encoche 26 → L5 de la encoche 18 → L4 de la encoche 8 → L3 de la encoche 54 → L2 de la encoche 44 → L1 de la encoche 36.
Une brin 3 de l'enroulement triphasé, à savoir une première extrémité V3 de V3-Y3, entre dans la première couche L1 d'une encoche 43 de l'enroulement dans le sens du courant, traverse l'enroulement et ressort finalement de la première couche L1 d'une encoche 54.
La séquence de connexion de l'enroulement est la suivante : L1 d'une encoche 43 →L2 d'une encoche 51 →L3 d'une encoche 7 →L4 d'une encoche 15 →L5 d'une encoche 25 →L6 d'une encoche 33 →L6 d'une encoche 42 →L5 d'une encoche 34 →L4 d'une encoche 24 →L3 d'une encoche 16 →L 2 d'une encoche 6 →L1 d'une encoche 52 →
L1 d'une encoche 44 →L2 d'une encoche 52 →L3 d'une encoche 8 →L4 d'une encoche 16 →L5 d'une encoche 26 →
L6 d'une encoche 34 →L6 d'une encoche 43 →L5 d'une encoche 35 →L4 d'une encoche 25 →L3 d'une encoche 17 →L2 d'une encoche 7 →L1 d'une encoche 53 →L1 d'une encoche 45 →L2 d'une encoche 53 →L3 d'une encoche 9 →L4 d'une encoche 17 →L5 d'une encoche 27 →L6 d'une encoche 35 →L6 d'une encoche 44 →L5 d'une encoche 36 →L4 d'une encoche 26 →L3 d'une encoche 18 →L2 d'une encoche 8 →L1 d'une encoche 54.
Une brin 1 de l'enroulement de phase W, à savoir une première extrémité W1 de W1-Z1, entre dans la première couche L1 d'une encoche 13 de l'enroulement dans le sens du courant, traverse l'enroulement et ressort finalement de la première couche L1 d'une encoche 24.
La séquence de connexion de l'enroulement est la suivante : L1 d'une encoche 13 →L2 d'une encoche 21 →L3 d'une encoche 31 →L4 d'une encoche 39 →L5 d'une encoche 49 →L6 d'une encoche 3 →L6 d'une encoche 12 →L5 d'une encoche 4 →L4 d'une encoche 48 →L3 d'une encoche 40 →L2 d'une encoche 30 →L1 d'une encoche 22 →L1 d'une encoche 14 →L2 d'une encoche 22 →L3 d'une encoche 32 →L4 d'une encoche 40 →L5 d'une encoche 50 →L6 d'une encoche 4 →L6 d'une encoche 13 →L5 d'une encoche 5 →L4 d'une encoche 49 →L3 d'une encoche 41 →L2 d'une encoche 31 →L1 d'une encoche 23 →L1 d'une encoche 15 →L2 d'une encoche 23 →L3 d'une encoche 33 →L4 d'une encoche 41 →L5 d'une encoche 51 →L6 d'une encoche 5 →L6 d'une encoche 14 →L5 d'une encoche 6 →L4 d'une encoche 50 →L3 d'une encoche 42 →L2 d'une encoche 32 →L1 d'une encoche 24.
Une brin 2 de l'enroulement de phase W, à savoir une première extrémité W2 de W2-Z2, entre dans la première couche L1 d'une encoche 31 de l'enroulement dans le sens du courant, traverse l'enroulement et ressort finalement de la première couche L1 d'une encoche 42.
La séquence de connexion de l'enroulement est la suivante : L1 d'une encoche 31 →L2 d'une encoche 39 →L3 d'une encoche 49 →L4 d'une encoche 3 →L5 d'une encoche 13 →L6 d'une encoche 21 →L6 d'une encoche 30 →L5 d'une encoche 22 →L4 d'une encoche 12 →L3 d'une encoche 4 →L2 d'une encoche 48 →L1 d'une encoche 40 →L1 d'une encoche 32 →L2 d'une encoche 40 →L3 d'une encoche 50 →L4 d'une encoche 4 →L5 d'une encoche 14 →L6 d'une encoche 22 →L6 d'une encoche 31 →L5 d'une encoche 23 →L4 d'une encoche 13 →L3 d'une encoche 5 →L2 d'une encoche 49 →L1 d'une encoche 41 →L1 d'une encoche 33 →L2 d'une encoche 41 →L3 d'une encoche 51 →L4 d'une encoche 5 →L5 d'une encoche 15 →L6 d'une encoche 23 →L6 d'une encoche 32 →L5 d'une encoche 24 →L4 d'une encoche 14 →L3 d'une encoche 6 →L2 d'une encoche 50 →L1 d'une encoche 42.
Une brin 3 de l'enroulement de phase W, à savoir une première extrémité W3 de W3-Z3, entre dans la première couche L1 d'une encoche 49 de l'enroulement dans le sens du courant, traverse l'enroulement et ressort finalement de la première couche L1 d'une encoche 6.
La séquence de connexion de l'enroulement est la suivante : L1 d'une encoche 49 →L2 d'une encoche 3 →L3 d'une encoche 13 →L4 d'une encoche 21 →L5 d'une encoche 31 →L6 d'une encoche 39 →L6 d'une encoche 48 →L5 d'une encoche 40 →L4 d'une encoche 30 →L3 d'une encoche 22 →L 2 d'une encoche 12 →L1 d'une encoche 4 →L1 d'une encoche 50 →L2 d'une encoche 4 →L3 d'une encoche 14 →L4 d'une encoche 22 →L5 d'une encoche 32 →L6 d'une encoche 40 →L6 d'une encoche 49 →L5 d'une encoche 41 →L4 d'une encoche 31 →L3 d'une encoche 23 →
L2 d'une encoche 13 →L1 d'une encoche 5 →L1 d'une encoche 51 →L2 d'une encoche 5 →L3 d'une encoche 15 →L4 d'une encoche 23 →L5 d'une encoche 33 →L6 d'une encoche 41 →L6 d'une encoche 50 →L5 d'une encoche 42 →L4 d'une encoche 32 →L3 d'une encoche 24 →L2 d'une encoche 14 →L1 d'une encoche 6.
